# EUROPÄISCHE PATENTSCHRIFT

(11) **EP 2 187 571 B1**
(45) Veröffentlichungstag und Bekanntmachung des Hinweises auf die Patenterteilung: **15.06.2011**
(21) Anmeldenummer: 08168977.0
(22) Anmeldetag: 12.11.2008
(51) Int. Cl.: H04L 12/40, H04L 12/24

(54) **Generieren einer Gerätebeschreibung für ein Messgerät**
Generating a device description for a measuring device
Génération d'une description d'appareil pour un appareil de mesure

(43) Veröffentlichungstag der Anmeldung: 19.05.2010
(73) Patentinhaber: VEGA Grieshaber KG, 77709 Wolfach (DE)
(72) Erfinder: Isenmann, Andreas, 77716, Haslach i.K. (DE); Auber, Harald, 78733, Aichhalden (DE); Faist, Fridolin, 77709, Oberwolfach (DE); Gaiser, Martin, 72275, Alpirsbach (DE); Kopp, Manfred, 77709, Wolfach (DE); Laun, Robert, 77756, Hausach (DE); Lienhard, Jürgen, 77716, Fischerbach (DE); Metzger, Manfred, 77716, Haslach i. K. (DE); Schätzle, Ralf, 77716, Fischerbach (DE)
(74) Vertreter: Kopf, Korbinian Paul

(56) Entgegenhaltungen:
- WO-A-03/039098
- WO-A-2007/071212
- US-A1- 2002 194 365
- US-A1- 2003 056 043
- US-A1- 2008 101 251
- KAISER J ET AL: "Self-describing devices in COSMIC" 10TH IEEE INTERNATIONAL CONFERENCE ON EMERGING TECHOLOGIES AND FACTORY AUTOMATION, IEEE, PISCATAWAY, NJ, USA, Bd. 1, 19. September 2005 (2005-09-19), Seiten 669-672, XP010905392 ISBN: 978-0-7803-9401-8
- DOBRESCU R ET AL: "Smart sensor with dual standard fieldbus interconnection capability" PROCEEDINGS OF THE 2001 IEEE INTERNATIONAL CONFERENCE ON CONTROL APPLICATIONS. CCA'01. MEXICO CITY, MEXICO, SEPT. 5 - 7, 2001; [IEEE INTERNATIONAL CONFERENCE ON CONTROL APPLICATIONS], NEW YORK, NY : IEEE, US, 5. September 2001 (2001-09-05), Seiten 1179-1183, XP010571137 ISBN: 978-0-7803-6733-3
- WOLFGANG GRANZER ET AL: "Gateway-free integration of BACnet and KNX using multi-protocol devices" INDUSTRIAL INFORMATICS, 2008. INDIN 2008. 6TH IEEE INTERNATIONAL CONFERENCE ON, IEEE, PISCATAWAY, NJ, USA, 13. Juli 2008 (2008-07-13), Seiten 973-978, XP031316171 ISBN: 978-1-4244-2170-1
- BUHLER D: "The CANopen markup language - representing fieldbus data with XML" INDUSTRIAL ELECTRONICS SOCIETY, 2000. IECON 2000. 26TH ANNUAL CONFJERE NCE OF THE IEEE 22-28 OCT. 2000, PISCATAWAY, NJ, USA,IEEE, Bd. 4, 22. Oktober 2000 (2000-10-22), Seiten 2449-2454, XP010569177 ISBN: 978-0-7803-6456-1
- SIMON R ET AL: "Field devices - models and their realisations" INDUSTRIAL TECHNOLOGY, 2002. IEEE ICIT '02. 2002 IEEE INTERNATIONAL CO NFERENCE ON DEC. 11-14, 2002, PISCATAWAY, NJ, USA,IEEE, Bd. 1, 11. Dezember 2002 (2002-12-11), Seiten 307-312, XP010637322 ISBN: 978-0-7803-7657-1
- SIMON R ET AL: "Integration of field devices using field device tool (fdt) on the basis of electronic device descriptions (EDD)" INDUSTRIAL ELECTRONICS, 2003. ISIE '03. 2003 IEEE INTERNATIONAL SYMPOS IUM ON JUNE 9-11, 2003, PISCATAWAY, NJ, USA,IEEE, Bd. 1, 9. Juni 2003 (2003-06-09), Seiten 189-194, XP010682646 ISBN: 978-0-7803-7912-1

## Beschreibung

Die vorliegende Erfindung betrifft das technische Gebiet der Messtechnik. Insbesondere betrifft die vorliegende Erfindung ein Verfahren zum Generieren einer Gerätebeschreibung einer Messvorrichtung, ein computerlesbares Speichermedium, eine Vorrichtung zum Generieren einer Gerätebeschreibung für eine Messvorrichtung, eine Anordnung von zumindest einer Speicherzelle und einen Messsensor.

Messgeräte, insbesondere Feldgeräte, beispielsweise ein Sensor oder ein Aktor, mögen zur Bedienung des Sensors eine Bedieneinrichtung oder eine Bedienoberfläche aufweisen. Die Bedienoberfläche oder das Bedientool mag von dem Sensor entfernt angeordnet sein. In einem Beispiel mag der Sensor mit der Bedienoberfläche über einen Feldbus oder einen Feldgerätebus verbunden sein.

Das mag bedeuten, dass in einer Bedieneinrichtung, insbesondere einem Auswertgerät, eine Bedienoberfläche bereitgestellt werden mag, welche es erlauben mag, mit dem Messgerät zu kommunizieren. Die Bedienoberfläche mag eine Kommandozeile auf dem Auswertgerät sein, die Bedienoberfläche kann aber auch ein grafisches Benutzerinterface (GUI, graphical user interface) sein.

Beispiele für grafische Benutzeroberflächen mögen die Bedientools AMS von Emerson, PDM von Siemens oder PACTware™ vom PACTware Consortium e. V. sein.

Zur Integration eines Messgeräts, einer Messvorrichtung oder eines Feldgeräts der unterschiedlichen Hersteller in die Bedientools mag von dem jeweiligen Hersteller des Feldgeräts eine für das entsprechende Feldgerät angepasste Bedienoberfläche in der Form einer für die Messvorrichtung und/oder den Feldgerätebus spezifischen Gerätebeschreibung bereitgestellt werden.

Die Bereitstellung der Gerätebeschreibung mag beispielsweise in einer Beschreibungssprache erfolgen. Die Gerätebeschreibung in einer Beschreibungssprache mag abhängig von dem jeweiligen Feldgerät sein, aber auch abhängig von dem jeweiligen Feldgerätebus, an dem das jeweilige Feldgerät eingesetzt werden soll. Ein Feldgerätebus mag auf einem Feldgerätebusprotokoll basieren.

Die Druckschrift Kaiser J. et al, "Self describing devices in COSMIC", 10th IEEE International Conference on emerging technologies and factory automation, IEEE, Piscataway, NJ, USA, Bd. 1, 19. September 2005, Seiten 669 - 672, XP 010905392 ISBN: 978-0-7803-9401-8, behandelt das dynamische Konfigurieren einer Anwendung indem ein selbstbeschreibendes Smart Device genutzt wird. Zum Beschreiben von Komponenten werden EDS (Electronic Data Sheets) in XML verwendet.

Die Druckschrift WO 2007/071212 A1 betrifft ein Verfahren zum Betreiben eines Gateways, wobei das Gateway mittels einer an einem Datenbus angeschlossenen Konfigurationseinrichtung konfiguriert wird, indem mit der Konfigurationseinrichtung Konfigurationsinformationen über den Datenbus in das Gateway übertragen werden. Die in das Gateway übertragenen Konfigurationsinformationen ermöglichen die Überführung von Daten zwischen zwei Datenübertragungsprotokollen.

Die Druckschrift US 2008/101251 beschreibt das Auswerten einer Nachricht und das Erkennen verschiedener Protokolle in einem Computer Netzwerk.

Die Druckschrift US 2003/0056043 beschreibt das automatische Erkennen eines Kommunikationsprotokolls beim Verbinden mit einem Systembus.

Es mag eine Aufgabe der vorliegenden Erfindung sein, ein effizientes Bereitstellen einer Gerätebeschreibung zu ermöglichen.

Gemäß einem exemplarischen Ausführungsbeispiel der vorliegenden Erfindung mag ein Verfahren zum Generieren einer Gerätebeschreibung für eine Messvorrichtung, ein computerlesbares Speichermedium, eine Vorrichtung zum Generieren einer Gerätebeschreibung für eine Messvorrichtung, eine Anordnung von zumindest einer Speicherzelle und ein Messsensor bereitgestellt werden.

Gemäß einem exemplarischen Ausführungsbeispiel der vorliegenden Erfindung mag ein Verfahren zum Generieren einer Gerätebeschreibung für eine Messvorrichtung in einem Zielfeldbusprotokoll bereitgestellt werden. Das Verfahren mag das Empfangen einer ersten Gerätebeschreibung einer Messvorrichtung aufweisen. Die erste Gerätebeschreibung der Messvorrichtung mag zumindest eine Variable aufweisen. Die zumindest eine Variable mag mit einer Speicherzelle der Messvorrichtung in Beziehung stehen.

Ferner mag das Verfahren das Auswählen eines Zielfeldbusprotokolls aus einer Vielzahl von Feldbusprotokollen aufweisen. In einem Beispiel mag das Verfahren das Bilden eines Blocks aus der zumindest einen Variablen aufweisen, wobei der zumindest eine Block eine maximale Blockgröße aufweisen mag. Der zumindest eine Block mag beispielsweise eine maximale Blockgröße aufweisen, welche der kleinsten maximalen Blockgröße der Vielzahl von Feldbusprotokollen entsprechen mag.

Diese maximale Blockgröße, d.h. ein Block mit maximal der Größe die der maximalen Blockgröße entspricht, mag ferner mit einer einzigen Anforderung, mit einem einzigen Befehl oder mit einem einzigen Kommando bei Einsatz des jeweiligen Feldbusprotokolls über einen Feldbus übertragen werden können. Das mag bedeuten, dass der zumindest eine Block mit einem einzigen Kommando in jedem der Vielzahl von Feldbusprotokollen komplett gelesen und/oder geschrieben werden kann.

In einem Beispiel mag das Verfahren zum Generieren einer Gerätebeschreibung das Bereitstellen des zumindest einen Blocks als zweite Gerätebeschreibung für die Messvorrichtung aufweisen, wobei die zweite Gerätebeschreibung in dem Zielfeldbusprotokoll, in einem Zielformat oder in einer Zielgerätesprache dargestellt sein mag. Die zweite Gerätebeschreibung mag eine zweite Gerätebeschreibungsdatei sein. Diese zweite Gerätebeschreibung kann beispielsweise ein Adressierungsschema für die Messvorrichtung sein.

Bereitstellen in einem Zielfeldbusprotokoll mag in einem Beispiel das Bereitstellen einer Gerätebeschreibung aufweisen, wobei die Gerätebeschreibung derart angepasst sein mag, dass sie in einem Feldbus, welcher nach dem Zielfeldbusprotokoll arbeiten mag, eingesetzt werden kann.

Gemäß einem anderen Ausführungsbeispiel der vorliegenden Erfindung mag ein computerlesbares Speichermedium bereitgestellt werden, welches einen Programmcode aufweisen mag, der, wenn er von einem Prozessor ausgeführt wird, das erfinderische Verfahren ausführen mag.

Ein computerlesbares Speichermedium mag beispielsweise eine Festplatte, eine Floppy-Disk, eine CD (Compact Disc), eine DVD (Digital Versatile Disc), ein Read Access Memory (RAM), ein Programmable Read Only Memory (PROM), eine Erasable PROM (EPROM), ein Mass Storage Device an einem Universal Serial Bus (USB), ein Speicherchip oder ein ähnlicher Datenträger sein. Unter einem computerlesbaren Speichermedium mag auch ein Computernetzwerk, wie beispielsweise das Internet, verstanden werden, welches zum Verbreiten von Computerprogrammen dienen kann.

Gemäß einem anderen Ausführungsbeispiel der vorliegenden Erfindung mag ein Programmelement geschaffen werden, welches Programmelement, wenn es von einem Prozessor ausgeführt wird, das erfindungsgemäße Verfahren ausführen mag.

Gemäß noch einem anderen Ausführungsbeispiel der vorliegenden Erfindung mag eine Vorrichtung zum Generieren einer Gerätebeschreibung für ein Messgerät oder für eine Messvorrichtung bereitgestellt werden, wobei die Vorrichtung eine Empfangseinrichtung, eine Auswahleinrichtung und eine Bereitstelleinrichtung aufweisen mag.

Die Empfangseinrichtung mag zum Empfang einer ersten Gerätebeschreibung für eine Messvorrichtung eingerichtet sein. D.h. die erste Gerätebeschreibung mag die Messvorrichtung beschreiben. Die Messvorrichtung selbst oder die erste Gerätebeschreibung der Messvorrichtung mag zumindest eine Variable aufweisen, wobei die zumindest eine Variable mit einer Speicherzelle der Messvorrichtung in Beziehung stehen mag. In anderen Worten mag insbesondere eine Speichereinrichtung oder eine Speicheranordnung der Messvorrichtung zumindest eine Speicherzelle aufweisen. Dieser Speicherzelle mag in der ersten Gerätebeschreibung eine Variable zugeordnet sein, so dass die Speicherzelle mit der Variablen in Beziehung stehen mag.

Die Auswahleinrichtung mag zum Auswählen eines Zielfeldbusprotokolls aus einer Vielzahl von Feldbusprotokollen eingerichtet sein.

Die Bereitstelleinrichtung mag zum Bilden zumindest eines Blocks aus der zumindest einen Variablen eingerichtet sein. Der zumindest eine Block mag eine maximale Blockgröße aufweisen, welche maximale Blockgröße der kleinsten maximalen Blockgröße der Vielzahl von Feldbusprotokollen entsprechen mag, wobei ein Block der maximalen Blockgröße mit einer einzigen Anforderung bei Einsatz des jeweiligen Feldbusprotokolls über einen Feldbus übertragbar sein mag. Die Bereitstelleinrichtung mag ferner eingerichtet sein, den zumindest einen Block als zweite Gerätebeschreibung für die Messvorrichtung in dem Zielfeldbusprotokoll bereitzustellen. In anderen Worten mag die Bereitstelleinrichtung eingerichtet sein, als zweite Gerätebeschreibung eine Datei bereitzustellen, die es erlauben mag, die Messvorrichtung an einem Feldbus zu betreiben, der auf dem Zielfeldbusprotokoll basieren mag.

Gemäß noch einem anderen Ausführungsbeispiel der vorliegenden Erfindung mag eine Anordnung von zumindest einer Speicherzelle angegeben werden, wobei die zumindest eine Speicherzelle mit zumindest einer Variablen in Beziehung stehen mag. Aus der zumindest einen Variablen mag zumindest ein Block gebildet werden, wobei der zumindest eine Block eine maximale Blockgröße aufweist, welche maximale Blockgröße der kleinsten maximalen Blockgröße einer Vielzahl von Feldbusprotokollen entsprechen mag, welche maximale Blockgröße mit einer einzigen Anforderung bei Einsatz des jeweiligen Feldbusprotokolls über einen Feldbus übertragen werden kann. Die gesamte Blockgröße, d.h. die maximale Blockgröße, mag nicht immer vollständig genutzt werden. Auch kleinere Blockgrößen als die maximale Blockgröße können möglich sein.

In einem Beispiel mag die zumindest eine Speicherzelle derart zu einem Block zusammengefasst werden, dass es möglich sein mag, den Inhalt der zumindest einen Speicherzelle mit einer einzigen Anfrage oder mit einem einzigen Befehl zwischen der Messvorrichtung und einem Bedientool zu übertragen.

Gemäß noch einem anderen Ausführungsbeispiel der vorliegenden Erfindung mag ein Messsensor bereitgestellt werden, welcher eine erfindungsgemäße Anordnung aufweisen mag.

Eine Messvorrichtung, insbesondere ein Messgerät, ein Feldgerät, ein Sensor oder ein Aktor mögen eine Vielzahl von Variablen aufweisen, welche Variablen Werte annehmen können. Die Werte der Variablen mögen eine Konfiguration für das jeweilige Feldgerät bestimmen. Insbesondere mag ein Feldgerät einen Speicherbaustein oder eine Speichereinrichtung aufweisen, welcher eine Vielzahl von Speicherzellen aufweist, welche durch die Zuordnung von Variablen mit Namen versehen werden können.

Die Speicherzellen, insbesondere die den Speicherzellen zugeordneten Variablen mögen in Form von Datenstrukturen anordenbar sein. Dabei mögen verschiedene Speicherzellen zu Blöcken zusammengefasst werden können, welche durch einen Datenstrukturnamen oder eine Objekt-ID (Objekt-Identifier) adressierbar sein mögen. Die Objekt-ID mag eine Basisadresse sein, die den Beginn einer Datenstruktur in dem Speicher, in dem Speicherbaustein oder in dem Speicherchip bezeichnen mag. Eine Datenstruktur mag die Zusammenfassung von gleichartigen oder zusammengehörigen Speicherzellen sein. In anderen Worten mag eine Datenstruktur eine geordnete Zusammenstellung von Speicherzellen sein. In den Speicherzellen mögen Parametrierwerte abgelegt werden können, welche Parametrierwerte sensorspezifische Eigenschaften bezeichnen können.

Beispielsweise kann der Hersteller des Feldgeräts mittels einer Manufacturer-ID oder manufacturerID gekennzeichnet sein. Ferner kann der Sensor bzw. das Feldgerät, insbesondere der Typ des Sensors, mittels eines Devicetyps oder eines deviceType charakterisierbar sein. Mittels der Objekt-ID bzw. mittels des Datenstruktumamens mögen gleichartige Speicherzellen zusammenfassbar sein. So mögen unter dem Datenstrukturnamen "Identifikation" sensorspezifische Variablen bzw. Speicherzellen zu finden sein, welche das Erkennen oder das Identifizieren des Sensors ermöglichen mögen.

Die Datenstruktur "Identifikation" mag eine Hersteller-ID (Manufacturer-ID), einen Gerätetyp (Device Type), einen Bustyp (Bus Type), eine Seriennummer (Serial Number) und eine DTM-ID (Device Type Manager Identifier/ Identifikation des für die Konfiguration zu verwendenden DTM's) aufweisen.

Die Anzahl der unter einem Datenstrukturnamen zusammengefassten Variablen bzw. der unter dem Datenstrukturnamen zusammengefassten Datenstruktur mag einer Blockgröße entsprechen. Die Blockgröße mag charakterisiert sein als diejenige Blockgröße, welche von einer Vielzahl von zur Auswahl stehenden Feldgerätebusprotokollen mittels einer einzigen Anforderung oder eines Kommandos gleichzeitig übertragen werden können.

Durch die Wahl der Blockgröße, d. h. durch die Wahl der maximal zu einer Datenstruktur zusammengefassten Speicherzellen, mag erreichbar sein, dass in jedem der zur Auswahl stehenden Feldgerätebusse die gleiche Datenstruktur und/oder die gleiche Objekt-ID für dieselbe Datenstruktur eingesetzt werden kann.

In sämtlichen Feldgerätebusstandards oder in sämtlichen Feldgerätebussystemen mögen die gleichen Datenstrukturen gleichzeitig übertragbar sein.

Eine Messvorrichtung mag in unterschiedlichen Feldgerätebussystemen oder Feldbussystemen mittels unterschiedlicher Beschreibungssprachen dargestellt werden. Mittels anpassen der Blockgröße für die Datenstrukturen mag vermieden werden, dass uneinheitliche Datenstrukturen in den unterschiedlichen Beschreibungen für die jeweils zur Verfügung stehende Vielzahl von Feldgerätebusprotokollen eingesetzt werden müssen. Folglich mag durch das Angleichen oder Anpassen der Blockgröße eine einheitliche Beschreibung für den selben Sensor in unterschiedliche Feldgerätebusse vorliegen.

Es kann von einer einheitlichen ersten Gerätebeschreibung oder von einer herstellerspezifischen Gerätebeschreibung (Device Description, DD) ausgegangen werden. Diese erste Gerätebeschreibung, herstellerspezifische Beschreibung oder Quell-Gerätebeschreibung mag in einer sensorspezifischen Beschreibungssprache, wie beispielsweise XML (Extensible Markup Language) vorliegen. In anderen Worten mag die Quell-Gerätebeschreibung in XML mit einer sensorspezifischen Struktur oder mit einer herstellerspezifischen Struktur beschrieben sein.

Die Parametrierwerte der Messvorrichtung, insbesondere auch die Messwerte, mögen in der Messvorrichtung, in dem Feldgerät oder in dem Sensor in der Form von Speicherzellen organisiert sein. Variablen mögen den Speicherzellen Namen geben, wobei jede Variable mit zumindest einer Speicherzelle in Verbindung stehen mag. Die Variablen oder Speicherzellen mögen zu einer Datenstruktur unter einer Objekt-ID zusammengefasst sein. Das mag bedeuten, dass bei Abfragen der jeweiligen Objekt-ID oder der Datenstruktur die Inhalte der Speicherzellen von der Datenstruktur geliefert werden mag.

Durch das Zusammenfassen der Variablen zu zumindest einem Block oder durch das Bilden von zumindest einem Block mag es möglich sein, dass in jedem der zur Auswahl stehenden Feldbusprotokollen mit einer Anforderung dieselben Variablen, dieselben Inhalte der Speicherzellen oder die selben Werte der in den Speicherzellen gespeicherten Parametrierwerte bereitgestellt werden können. Folglich mag in den verschiedenen Zielfeldbusprotokollen, d. h. in den Feldbusprotokollen, für die ein Adressierungsschema bzw. eine Gerätebeschreibung erzeugt werden soll, eine einheitliche Adressierung der Variablen, Parameter oder Parametrierwerte möglich sein. Beispielsweise mag die selbe Object ID in den unterschiedlichen Ziel-Feldbussystemen die selbe Datenstruktur ansprechen oder adressieren.

Es mag also ein Aspekt der vorliegenden Erfindung sein, eine Messvorrichtung, einen Sensor, ein Feldgerät, insbesondere einen Speicher einer Messvorrichtung derart in Blöcke aufzuteilen und mittels einer ersten Gerätebeschreibung oder Quell-Gerätebeschreibung zu beschreiben, dass eine einheitliche Grundstruktur für sämtliche Zielfeldbusprotokolle gegeben sein mag, welche als Zielfeldbussysteme in Frage kommen mögen. Ein Zielfeldbusprotokoll mag ein Feldbusprotokoll sein, für welches eine feldbusprotokollspezifische Gerätebeschreibung der Messvorrichtung, insbesondere des Sensors, oder eine zweite Gerätebeschreibung generiert werden soll. Die erste Gerätebeschreibung mag folglich in eine zweite Gerätebeschreibung übersetzbar sein, abhängig von dem ausgewählten Zielfeldbusprotokoll.

Die Adressierung der Speicherzellen mittels einer Objekt-ID und zugehöriger Datenstruktur mag das Anpassen an unterschiedliche Feldbusprotokolle ermöglichen.

In einem Beispiel mag die erste Gerätebeschreibung, die Ausgangsgerätebeschreibung oder die Quellgerätebeschreibung als eine Datei in dem XML-format vorliegen.

Gemäß einem anderen Ausführungsbeispiel der vorliegenden Erfindung mag das Zielfeldbusprotokoll zumindest ein Zielfeldbusprotokoll ausgewählt aus der Gruppe der Zielfeldbusprotokolle bestehend aus dem HART-Feldbusprotokoll, dem Profibusbusprotokoll, dem Profinet, dem Foundation Fieldbus Protokoll, dem IO-Link - Protokoll, dem Modbus - Protokoll und dem CAN - Protokoll (Controller Area network) sein. Das Zielfeldbusprotokoll mag das Feldbusprotokoll sein, auf welchem der ausgewählte Zielfeldbus basieren mag. Der Zielfeldbus mag der Feldbus sein, in welchem der Sensor benutzt werden soll.

Die Messvorrichtung mag in einer ausgewählten Untergruppe der Feldbusprotokolle einheitlich beschreibbar sein, insbesondere in den Zielfeldbusprotokollen.

Gemäß einem anderen Ausführungsbeispiel der vorliegenden Erfindung mag die zweite Gerätebeschreibung, die Zielgerätebeschreibung, das Zielformat oder das Adressierungsschema in einer Gerätebeschreibungssprache ausgewählt aus der Gruppe der Gerätebeschreibungssprachen bestehend aus DDL (Device Description Language), EDDL (Enhanced DDL) oder für einen DTM (Device Type Manager) basierend auf FDT (Field Device Type) bereitgestellt werden.

In einem anderen Beispiel mag eine aus FDT und EDD vereinte Beschreibungssprache, beispielsweise FDI (Field Device Integration) eingesetzt werden. Auch für FDI kann die entsprechende Beschreibung erzeugt werden.

Gemäß einem weiteren Ausführungsbeispiel der vorliegenden Erfindung mag der zumindest eine Block mittels einer Objekt-ID adressierbar sein.

Somit mag mittels einer einzigen Objekt-ID oder einer einzigen Basisadresse eine ganze Datenstruktur und insbesondere die Werte der Datenstruktur auslesbar sein. Gemäß noch einem anderen Ausführungsbeispiel der vorliegenden Erfindung mag die gesamte erste Gerätebeschreibung der Messvorrichtung eindeutig adressierbar sein, indem in dem Bedientool die zweite Gerätebeschreibung bzw. das Adressierungsschema auf einen gerätespezifischen Bereich in dem jeweiligen Feldgerätefeldbusprotokoll oder in einer zu dem Feldgeräteprotokoll gehörigen Gerätebeschreibung projiziert oder gemappt werden mag.

Damit kann ein Mappen von einer einheitlichen Gerätebeschreibungssprache, beispielsweise in dem XML-Format, auf ein Zielfeldbusprotokoll ermöglicht werden.

Die allgemeine Gerätebeschreibung oder die herstellerspezifische Gerätebeschreibung eines Feldgeräts bzw. das Feldgerät mag sich durch das Mappen in einem jeweiligen Zielbedientool darstellen lassen.

Der gerätespezifische Bereich eines Feldbusprotokolls mag ein Bereich sein, der beispielsweise für herstellerspezifische Angaben reserviert sein mag, wie beispielsweise Device Specific Commands oder ein Transducerblock.

Gemäß noch einem anderen Ausführungsbeispiel der vorliegenden Erfindung mag die zweite Gerätebeschreibung oder das Adressierungsschema so bereitgestellt werden, dass unterschiedliche Blöcke oder unterschiedliche Objekt-IDs mittels einer einzigen Kommandonummer und/oder mittels einer einzigen Transaktionsnummer adressiert werden können.

Eine DDL Beschreibungssprache für einen HART Feldgerätebus oder für das HART Feldbusprotokoll mag vorsehen, dass Variablennamen auf Anforderungen abgebildet werden, wobei die Anforderungen eine Kommandonummer und/oder eine Transaktionsnummer aufweisen. Mittels des Variablennamens, welcher mit dem Variablennamen der Speicherzelle auf der Messvorrichtung übereinstimmen mag, mag ein Abfragekommando in einer Bedieneinrichtung zusammenstellbar sein, welche den Zugriff auf die spezifische Adresse in dem Feldgerät ermöglichen mag.

In analoger Weise mag sich auch eine Bereitstellung von Werten realisieren lassen. Somit mag unter dem Begriff Anforderung auch eine Bereitstellung von Parametrierwerten verstanden werden. Folglich mag die Blockgröße die kleinste zwischen einer Bedieneinrichtung oder einem Bedientool und einem Feldgerät austauschbare Informationseinheit sein.

Mittels des Verwendens einer Kommandonummer und/oder einer Transaktionsnummer mag somit eine Beziehung zwischen Bedientool und Feldgerät herstellbar sein. Die Anzahl verwendbarer Transaktionen mag beschränkt sein. Durch Erhöhen der Kommandonummer mögen sich unterschiedliche Objekt-IDs abfragen lassen, wodurch ein Paging der Messvorrichtung oder des Speichers der Messvorrichtung erreicht werden kann.

Gemäß noch einem anderen Ausführungsbeispiel der vorliegenden Erfindung mag die zweite Gerätebeschreibung derart bereitgestellt werden, dass unterschiedliche Blöcke oder unterschiedliche Objekt-IDs mittels einer Slotnummer und/oder mittels eines Index adressierbar sind.

Eine Slotnummer und/oder Indexnummer mag in einem Profibusfeldbussystem zum Einsatz kommen. Mittels Slotnummer und Index mögen sich dieselben Blöcke der Messvorrichtung in einer Profibusumgebung adressieren lassen, wie in einer HART Busumgebung mittels Kommandonummer und/oder Transaktionsnummer.

Die Wahl der Blockgrößen, so dass die Blockgröße der kleinsten maximalen Blockgröße für eine Anfrage und/oder für eine Bereitstellung von Variablen entspricht, mag ein einheitliches Abfragen der Blöcke in den unterschiedlichen Feldbussystemen ermöglichen.

Gemäß einem anderen exemplarischen Ausführungsbeispiel der vorliegenden Erfindung mag die Messvorrichtung eine Messvorrichtung ausgewählt aus der Gruppe der Messvorrichtungen bestehend aus einem Sensor, einem Aktor, einem Füllstandsmesssensor, einem Druckmesssensor, einem Grenzstandmesssensor und einem Feldgerät sein.

Gemäß noch einem anderen Ausführungsbeispiel der vorliegenden Erfindung mag die zumindest eine Variable einem Parametrierwert entsprechen. Mittels der zumindest einen Variablen, der Datenstruktur, oder einer Vielzahl von Variablen mag sich somit die Messvorrichtung für den Messeinsatz parametrieren lassen.

Gemäß noch einem anderen Ausführungsbeispiel der vorliegenden Erfindung mag das Bereitstellen des zumindest einen Blocks als zweite Gerätebeschreibung das Zusammenfassen von Blöcken zu einer einzigen Anforderung und/oder einem einzigen Kommando aufweisen.

Kleine Datenstrukturen mögen somit in einem Kommando, d. h. in einer Anfrage oder in einer Bereitstellung abgefragt oder bereitgestellt werden können.

Gemäß noch einem anderen exemplarischen Ausführungsbeispiel der vorliegenden Erfindung mag die erste Gerätebeschreibung eine XML Datei sein.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte in Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehört, auch jede Kombination zwischen Merkmalen gehört, die sich auf unterschiedliche Kategorien von Gegenständen beziehen. Insbesondere sollen Kombinationen zwischen Merkmalen von Vorrichtungsansprüchen und Merkmalen von Verfahrensansprüchen offenbart sein.

Im Folgenden werden weitere exemplarische Ausführungsbeispiele der vorliegenden Erfindung mit Verweis auf die Figuren beschrieben.
Fig. 1 zeigt ein Blockschaltbild einer Vorrichtung zum Generieren einer Gerätebeschreibung gemäß einem exemplarischen Ausführungsbeispiel der vorliegenden Erfindung.
Fig. 2 zeigt ein Blockdiagramm einer Messvorrichtung mit einem Adressierungsschema gemäß einem exemplarischen Ausführungsbeispiel der vorliegenden Erfindung.
Fig. 3 zeigt ein Mappingschema einer gerätespezifischen Beschreibungssprache auf die Beschreibungssprache eines ersten Bedientools gemäß einem exemplarischen Ausführungsbeispiel der vorliegenden Erfindung.
Fig. 4 zeigt eine detaillierte Darstellung einer Gerätebeschreibung in einer Gerätebeschreibungssprache mit zugehörigen Upload- und Downloadbefehlen gemäß einem exemplarischen Ausführungsbeispiel der vorliegenden Erfindung.
Fig. 5 zeigt ein Mappen einer Gerätebeschreibung auf eine Profibus PA Feldbus Gerätebeschreibung gemäß einem exemplarischen Ausführungsbeispiel der vorliegenden Erfindung.
Fig. 6 zeigt ein Blockdiagramm eines Bedientools und einer Messgerätevorrichtung, wobei ein physikalischer Block und ein Funktionsblock auf eine gerätespezifische Beschreibung zurückgemappt wird gemäß einem exemplarischen Ausführungsbeispiel der vorliegenden Erfindung.
Fig. 7 zeigt ein Flussdiagramm für ein Verfahren zum Generieren einer Gerätebeschreibung einer Messvorrichtung gemäß einem exemplarischen Ausführungsbeispiel der vorliegenden Erfindung.

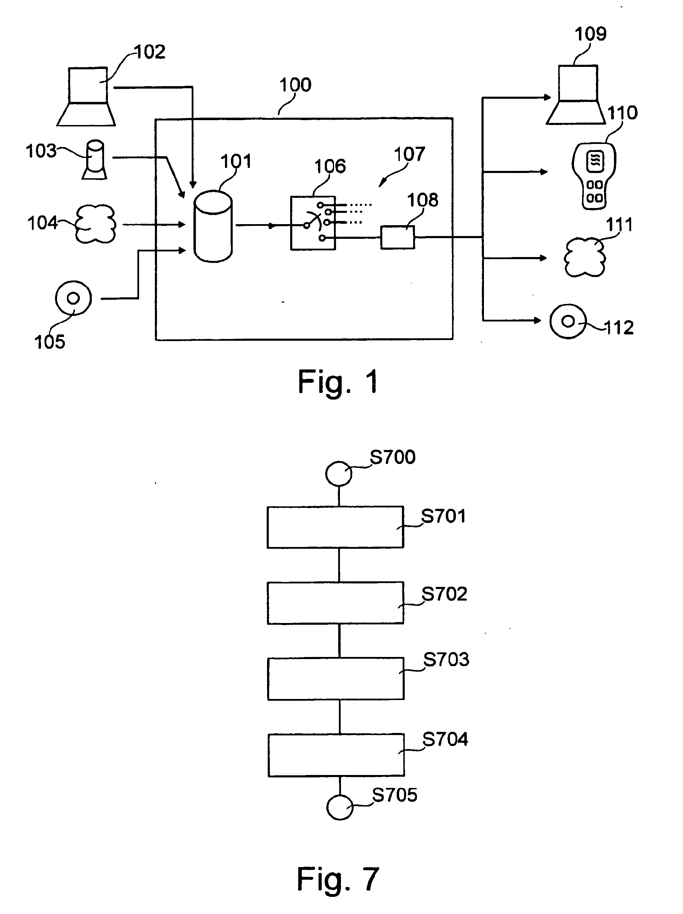

Die Darstellungen in den Figuren sind schematisch und nicht maßstäblich. In der folgenden Beschreibung der Fig. 1 bis Fig. 7 werden die gleichen Bezugsziffern für gleiche oder sich entsprechende Elemente verwendet.

Fig. 1 zeigt eine Vorrichtung zum Generieren 100 einer Gerätebeschreibung für ein Messgerät. Die Vorrichtung zum Generieren 100 einer Gerätebeschreibung oder der Codegenerator 100 weist eine Empfangseinrichtung 101 auf. Die Empfangseinrichtung 101 kann von verschiedenen Eingabequellen die erste Gerätebeschreibung oder die herstellerspezifische Gerätebeschreibung erhalten. So ist beispielsweise die Empfangseinrichtung 101 mit dem Eingabegerät 102 verbunden, über das die erste Gerätebeschreibung bereitgestellt werden kann. Die Eingabeeinrichtung 102 weist beispielsweise eine Tastatur auf. Ferner kann die Empfangseinrichtung 101 direkt mit dem Messgerät 103, einer Messvorrichtung 103 oder dem Sensor 103 verbunden sein. Die Empfangseinrichtung 101 kann somit direkt aus dem zu beschreibenden Feldgerät bzw. dem zu beschreibenden Messgerät 103 die Beschreibung auslesen.

Die Gerätebeschreibung kann auch über das Netzwerk 104, welches mit der Empfangseinrichtung 101 verbunden ist, bereitgestellt werden. Außerdem kann jeder beliebige Datenträger 105 oder ein computerlesbares Speichermedium 105, wie beispielsweise eine CD, eine DVD, eine Floppy Disk, eine Hard Disk, ein USB-Mass Storage Device (Massenspeicher Einrichtung), ein Flash-Speicher oder ein EPROM 105 mit der Empfangseinrichtung 101 verbunden werden, um die erste Gerätebeschreibung einer Messvorrichtung 103 bereitzustellen.

Die erste Gerätebeschreibung umfasst im Wesentlichen ein Adressierungsschema, eine Anordnung eines Speichers oder eine Darstellung der Aufteilung eines Speicherbereichs in der Messvorrichtung 103 bzw. für das Messgerät. Die Speicheraufteilung der Messvorrichtung ist dabei so gewählt, dass zusammengehörige Variablen oder Parameter zu Datenstrukturen zusammengefasst werden.

Die Datenstrukturen erhalten Namen, welche über Objekt-IDs abfragbar sind. Die Aufteilung des Speichers orientiert sich dabei im Wesentlichen an einer von einer Vielzahl von Feldbusprotokollen oder Zielbeschreibungssprachen maximal bereitstellbaren Blockgröße. D. h. nachdem festgelegt worden ist, für welche Feldbusprotokolle eine Gerätebeschreibung für ein Messgerät bereitgestellt werden soll, wird ermittelt, welche maximale Blockgröße von allen Zielfeldbusprotokollen mittels eines Aufrufes, d. h. mittels eines einzigen Kommandos, übertragen werden kann. Dabei mag sich die Übertragung von Blöcken bzw. die Anfrage sowohl auf Upload als auch Download beziehen. D. h. die maximale Blockgröße wird gemeinsam für Abfragekommandos wie auch für Beschreibkommandos ermittelt (Read Command/Write Command).

Die Empfangseinrichtung 101 ist eingerichtet, die empfangene Gerätebeschreibung bzw. die ausgelesene Gerätebeschreibung, falls sie noch nicht der maximalen gemeinsamen Blockgröße entspricht, derart aufzuteilen, dass Blöcke aus der erhaltenen ersten Gerätebeschreibung, der herstellerspezifischen Gerätebeschreibung oder der Einheitsgerätebeschreibung gebildet werden, so dass für alle Zielfeldbusprotokolle, für alle Zielgerätebeschreibungen oder für alle zweiten Gerätebeschreibungen, die erzeugt werden sollen, sichergestellt ist, dass sie mit derselben Blockgröße arbeiten. Dadurch lässt sich erreichen, dass gleiche Variablen bzw. gleiche Parameter in der Messvorrichtung mittels der gleichen Objekt-ID angesprochen werden können. Somit mag die Übersichtlichkeit der Abfragebefehle erhöht werden, da nicht in jedem Feldbussystem eine andere Aufteilung der Variablen oder Speicherzellen für das Feldgerät erzeugt werden muss.

Mittels der Auswahleinrichtung 106, welche mit der Empfangseinrichtung 101 verbunden ist, kann dann das Zielfeldbusprotokoll bzw. das Format der Zielgerätebeschreibung oder das Zieladressierungsschema eingestellt werden. Mittels der Auswahleinrichtung lässt sich somit ausgehend von der einheitlichen ersten Gerätebeschreibung oder herstellerspezifischen Gerätebeschreibung, welche beispielsweise eine XML-Datei sein mag, eine an ein Zielfeldbusprotokoll angepasste Gerätebeschreibung erzeugen. Die so angepasste Zielgerätebeschreibung, das Zieladressierungsschema oder die zweite Gerätebeschreibung wird jeweils zu einer den Auswahlkanälen 107 zugeordneten Bereitstelleinrichtung 108 geliefert. (In Fig. 1 ist nur eine der Vielzahl von Bereitstelleinrichtungen gezeigt. Der Aufbau oder der Anschluss der anderen Bereitstelleinrichtungen ist ähnlich der gezeigten Bereitstelleinrichtung 108. Ebenso sind die anderen Bereitstelleinrichtungen mit den Peripheriegeräten 109, 110, 111, 112 verbunden.)

Die Bereitstellung in der Bereitstelleinrichtung 108 kann beispielsweise als Datei erfolgen. Dabei kann die Datei in Form einer DDL oder EDDL - Beschreibung, oder in einem Format für die Nutzung durch einen DTM bereitgestellt werden. Ferner kann wiederum eine feldgerätebusspezifische XML-Datei bereitgestellt werden. So existiert beispielsweise eine Bereitstelleinrichtung 108 für das HART Feldbusprotokoll, für das Profibusfeldbusprotokoll oder für das Foundation Fieldbus Protokoll.

Die in der jeweiligen Bereitstelleinrichtung 108 erzeugte Gerätebeschreibung kann wiederum in verschiedenen Formen bereitgestellt werden. Beispielsweise kann die Gerätebeschreibung über einen Steuerrechner 109 mit Tastatur und Bildschirm bereitgestellt werden. Ferner kann die erzeugte Gerätebeschreibung direkt auf ein Bedientool 110 gespielt werden. Auf dem Bedientool kann eine kommandozeilenorientierte Bedienoberfläche oder eine grafisch, d. h. eine mit Symbolen arbeitende Bedienoberfläche laufen.

Außerdem kann die erzeugte Gerätebeschreibung über das Netz 111, welches dasselbe Netz wie das Eingangsnetz 104 sein kann, bereitgestellt werden. Über das Netz 111 kann somit einer Vielzahl von Kunden eine erzeugte Gerätebeschreibung zur Verfügung gestellt werden. Außerdem kann die erzeugte Gerätebeschreibung von der Bereitstelleinrichtung 108 auf das Speichermedium 112 gespielt werden und verteilt bzw. vertrieben werden. Das Speichermedium 112 kann eine Floppy Disk, eine CD, eine DVD, ein USB-Mass Storage Device oder ein Flash-Speicher sein. Neben den dargestellten Eingabe- und Ausgabemöglichkeiten existieren noch weitere Ausgabemöglichkeiten oder Speichermedien, die zum Speichern von Dateien eingerichtet sind.

Zur Integration von Feldgeräten oder Messvorrichtungen unterschiedlicher Hersteller in ein Bedientool wird von dem jeweiligen Hersteller des Feldgeräts eine für das entsprechende Feldgerät angepasste Bedienoberfläche in der Form einer Datei bereitgestellt. Als Architektur für die Bedientools haben sich unterschiedliche Technologien oder Technologiekonzepte etabliert, denen bei der Erstellung von Bedienoberflächen für das jeweilige Bedientool mittels der Beschreibungssprachen Rechnung getragen werden muss. Die Verfügbarkeit einer Bedienoberfläche für das bei einem Anwender vorhandene Bedientool kann für die Kaufentscheidung über ein Feldgerät von Bedeutung sein.

Beispielsweise gibt es das Field Device Tool (FDT) System mit Device Type Managern (DTM). Bei der FDT Technologie werden binäre Files als eine Bedienoberflächenbeschreibungsdatei genutzt, um die Bedienoberfläche des zugehörigen Feldgeräts zu beschreiben. Die Bedienoberflächenbeschreibungsdatei (DTM) ist mit der sogenannten FDT-Schnittstelle ausgestattet und wird in das verwendete Bedientool (auch Rahmenapplikation oder Frame genannt) eingelesen, um über das Bedientool das Feldgerät ansprechen zu können. Die FDT-Schnittstelle definiert dabei den Verbindungskanal zwischen Rahmenapplikation (z.B. PACTware^{™}) und DTM.

Ein anderes Konzept wird mittels des Device Description (DD) Konzepts, des Electronic Device Description (EDD) Konzepts bzw. des Enhanced EDD (EEDD) Konzepts verfolgt. Bei DD, EDD oder EEDD wird die Bedienoberfläche oder die Gerätebeschreibung in einem ASCII Text bereitgestellt, der unter Verwendung einer Beschreibungssprache geschrieben ist, die in Teilen der Programmiersprache C vergleichbar ist. Daher handelt es sich bei der Bedienoberflächenbeschreibungsdatei um eine Textdatei.

Die Gerätebeschreibung des Feldgeräts, die entweder als binäres File oder als ASCII File bereitgestellt wird, dient nach dem Einlesen in das zugehörige Bedientool der Darstellung des Feldgerätes in einer Bedienoberfläche innerhalb des Bedientools oder innerhalb der Bedientoolumgebung. Über die für das Feldgerät in dem Bedientool erzeugte Oberfläche kann das Feldgerät über das einheitliche Bedientool angesprochen werden.

Durch das Bereitstellen einer Gerätebeschreibung für ein Bedientool 110, mag es möglich sein, eine Beziehung zwischen dem Bedientool 110 und dem zugehörigen Messgerät, beispielsweise dem Sensor 103 herzustellen.

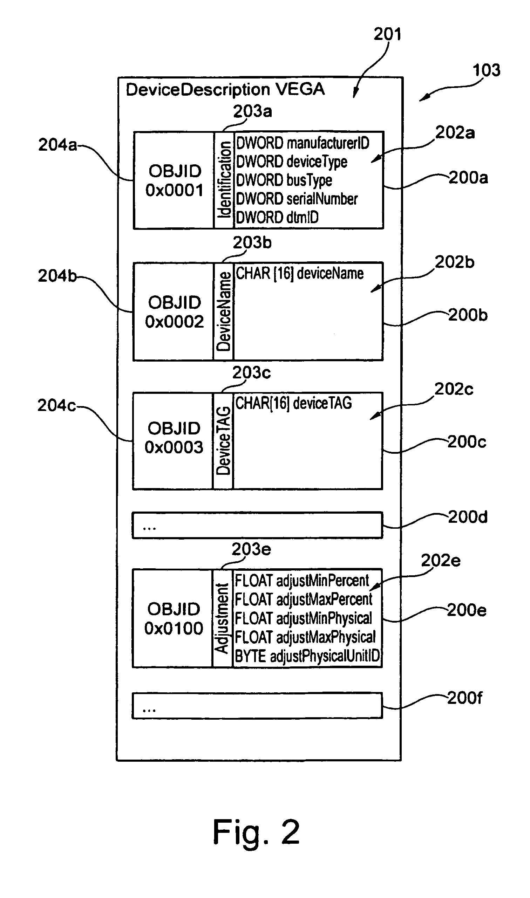

Fig. 2 zeigt ein Blockdiagramm einer Messvorrichtung mit einem Adressierungsschema gemäß einem exemplarischen Ausführungsbeispiel der vorliegenden Erfindung.

Die Messvorrichtung 103 zeigt eine Aufteilung eines Speicherbereichs in eine Vielzahl von gleich großen Blöcken 200a, 200b, 200c, 200d, 200e, 200f. Die Größe der Blöcke 200a bis 200f orientiert sich dabei an der kleinsten gemeinsamen Blockgröße, welche in einer Vielzahl von vorgesehenen Feldbussystemen mit einem Befehl übertragen werden kann. Beispielsweise mag die Größe eines Blocks, welcher mit einer Anfrage bzw. mit einem Kommando in einem HART Bussystem übertragen werden kann, 20 Byte betragen, wohingegen in einem Profibusfeldbussystem die maximale Blockgröße 64 Byte beträgt.

Um sowohl in dem HART System als auch in dem Profibussystem dieselben Objekt-IDs bzw. dieselbe Aufteilung der Speicherzellen 201 gewährleisten zu können, wird beispielsweise wenn die Auswahl zwischen HART- und Profibussystem existiert auf die kleinste maximale Blockgröße zurückgegriffen. In dem Fall des HART Systems mit 20 Byte und des Profibussystems mit einer maximalen Blockgröße von 64 Byte wird daher eine maximale Blockgröße von 20 Byte gewählt.

In einem Block 200a bis 200f werden außerdem logisch zusammengehörige Speicherzellen zusammengefasst. So werden beispielsweise die Speicherzellen 202a, welche in ihrer Funktion oder in Funktion der in Ihnen gespeicherten Wertern die Identifikation eines Sensors betreffen, mit Variablennamen versehen und zu einer Datenstruktur 202a zusammengefasst.

Die Datenstruktur 202a erhält einen Datenstrukturnamen 203a. Die Datenstruktur 202a mag unter der Objekt-ID 204a ansprechbar sein, beispielsweise OBJID 0x0001. Die Objekt-ID ist eine Adresse in hexadezimaler Schreibweise. Beispielsweise fasst der erste Block von der Messvorrichtung 103 die Speicherzellen Manufacturer-ID, Device Type, Bus Type, Serial Number und DTM-ID, welche alle die Größe DWORD aufweisen, also 4 Byte aufweisen, zu dem Namen der Datenstruktur "Identifikation" 203a zusammen. D.h. die Speicherzellen bilden einen entsprechenden Block. Der erste Block 200a ist unter der Objekt-ID Obj ID 0x0001 204a ansprechbar.

Ein BYTE mag 8 Bit aufweisen, ein WORD mag 16 Bit aufweisen und ein DWORD mag 32 Bit aufweisen.

In anderen Worten, wenn die Firmware auf der Messvorrichtung 103 ein Abfragekommando mit der entsprechenden Objekt-ID 204a, 204b, 204c erhält, so stellt die Firmware die Speicherzellen 202a aus der Datenstruktur 203a, 203b, 203c bereit. Insbesondere stellt die Firmware eine Belegung der Speicherzellen bereit. Beispielsweise ist die Manufacturer-ID eine eindeutige Kennung für den Hersteller, so dass anhand der Manufacturer-ID beispielsweise festgestellt werden kann, dass der Hersteller des vorliegenden Sensors die Firma VEGA ist.

Außerdem weist die Datenstruktur 202a die Variable Device Type auf, welche eine Nummer enthält, die einen Hinweis auf das eingesetzte Messgerät 103 gibt. So weist beispielsweise die Nummer 232 auf ein Messgerät VEGAPULS, die Nummer 231 hingegen auf ein VEGAFLEX hin.

Außerdem weist die Datensstruktur Identifikation die Speicherzelle Bus Type auf, welche angibt, für welchen Bus das Gerät eingesetzt werden soll. Die Angabe Bus Type in der allgemeinen Gerätebeschreibung mag zum Auslesen von Variablen über proprietäre Schnittstellen verwendet werden. Die Datenstrukturen der allgemeinen Gerätebeschreibung kann damit auch zur Kommunikation über die proprietäre I2C - Schnittstelle oder I²C-Schnittstelle verwendet werden. Proprietär mag bedeuten, dass es sich im Wesentlichen nicht um ein Feldbusprotokoll handelt und direkt auf den Messsensor zugegriffen werden kann. Damit über diese Schnittstelle ermittelt werden kann, für welchen Bus der Sensor ausgelegt sein mag, kann diese Angabe in der Struktur vorgesehen werden. Außerdem umfasst der Block Identifikation 200a die Seriennummer des Messgeräts 103. Mit der Seriennummer lässt sich das jeweilige Messgerät eindeutig identifizieren.

Ferner weist die Datenstruktur 202a des ersten Blocks 200a die Variable DTM-ID (Device Type Manager ID) des eingesetzten Device Type Managers auf. Mit dieser Variablen mag es auch möglich sein, für einen einzelnen Sensor eine ganz spezielle DTM - Bedienung zur Verfügung zu stellen, also eine, die vom Standard abweicht.

Der zweite Block, welcher in Fig. 2 dargestellt ist, ist der Block mit dem Datenstrukturnamen 203b "Device Name". Dieser zweite Block ist unter der Objekt-ID 0x0002 204b adressierbar. Die Datenstruktur 203b umfasst den Characterwert Char[16] Device Name 202b als Datenstruktur.

Verglichen mit dem Block "Identifikation" 200a weist der Block "Device Name" 200b eine geringere Anzahl von Speicherzellen oder Variablen in der Datenstruktur 202b auf. Der zweite Block 200b oder der Device Name Block weist lediglich die Variable Device Name auf, welche den leserlichen Namen vom Messgerät 103 liefert.

Der dritte Block mit der Objekt-ID 204c und dem Datenstrukturnamen 203c Device TAG weist die Datenstruktur 202c Device TAG, welche einen Characterwert 16 (CHAR[16]) umfasst auf. Somit ist auch die Größe der dritten Datenstruktur Device TAG 203c wie die zweite Datenstruktur Device Name 203e geringer als die Blockgröße der ersten Datenstruktur 200a.

Unter der Annahme, dass die Datenstruktur 200a die maximal in den gemeinsamen Zielbussystemen zulässige Blockgröße darstellt beträgt in einem Beispiel die maximale Blockgröße 20 Byte. Somit ist es möglich, dass beispielsweise bei einer Abfrage der Datenstruktur "Device Name" 203b oder der Datenstruktur 203c "Device TAG" eine weitere Datenstruktur mit einer maximalen Größe von 4 Byte kombiniert übertragen wird. Durch das Zusammenfassen von verschiedenen Datenstrukturen, welche die maximale Blockgröße nicht ausnützen, können mit einer einzigen Anfrage mehrere Blöcke übertragen werden. Folglich kann Übertragungskapazität oder Übertragungsbandbreite gesteigert werden.

Zum Kombinieren verschiedener Blöcke in einer Abfrage erkennt die Firmware der Messvorrichtung 103, dass beide Blöcke 200b und 200c von einem Bedientool abgefragt oder gesetzt werden sollen und bündelt das Ergebnis der Anfrage, bevor es das Ergebnis der Anfrage verschickt. Das Büdeln kann sowohl für Lese Operation als auch für Schreib Operationen eingesetzt werden. In dem Übertragungsprotokoll existiert ein Feld 402, 404, in dem die Anzahl übertragener Anfrageparameter steht. Dieses Feld wird vom Bedientool mit dem entsprechenden Wert versorgt. Somit mag das Bedientool für das Zusammenfassen von Datenstrukturen sorgen. Der Upload 301, 403 und/oder der Download 302, 413 mag in das Übertragungsprotokoll, beispielsweise HART, eingebettet werden.

Ferner ist in Fig. 2 der 256. Block 200e der Messvorrichtung 103 dargestellt, welcher die Speicherzellen, Variablen oder Datenstruktur 202e mit dem Datenstrukturnamen 203e "Adjustment" zusammenfasst. Die einzelnen Variablen sind die Floatwerte adjustMinPercent, adjustMaxPercent, adjustMinPhysical und adjustMaxPhysical. Außerdem umfasst die Adjustmentdatenstruktur 202e den Bytewert adjustPhysicalUnit ID.

Ein DWORD weist 4 Byte auf, ein Character [16] weist 16 Byte auf, ein Floatwert weist 4 Byte auf und ein Bytewert weist 1 Byte auf. Somit ist die in Fig. 2 dargestellte maximale Blockgröße, falls davon ausgegangen wird, dass der erste Block 200a vollständig gefüllt ist, ein Block mit der Größe 5 mal 4 Byte, also 20 Byte. Dies entspricht der maximalen Blockgröße, welche in einem HART Feldbussystem übertragen werden kann. Folglich bestimmt in dem in Fig. 2 dargestellten Ausführungsbeispiel die Größe des HART Feldbussystems die maximale Größe der Blocks, in welche der Speicher der Messvorrichtung 103 aufgeteilt wird. Ein Block 200b, 200c, 200e muss nicht vollständig gefüllt sein.

Die Kombination Manufacturer-ID, Device Type und Bus Type 202a aus der Datenstruktur "Identifikation" 203a erlaubt eine eindeutige Identifikation der vorliegenden Messvorrichtung 103. Bei der Kombination Bus Type, Device Type und Manufacturer-ID kann es sich also um einen Geräteschlüssel handeln der die Messvorrichtung 103 eindeutig identifizieren kann. Ein an die Messvorrichtung 103 angeschlossenes Bedientool, in Fig. 2 nicht gezeigt, kann durch Abfrage der Datenstruktur 203a Identifikation und Filtern der Manufacturer-ID, Bus Type und des Device Types somit einen eindeutigen Hinweis auf den Hersteller der vorliegenden Messvorrichtung 103 gewinnen. Damit lässt sich in einem Bedientool eine Abfrage zum Erkennen aller an einem Feldgerätebus angeschlossenen Feldgeräte 103 durchführen.

Mittels der eindeutigen Identifikation der Messvorrichtung kann das Bedientool die zugehörige Gerätebeschreibung für das jeweils verwendete Bussystem ermitteln und kann somit auf die Parameter, insbesondere die Speicherzellen 202a, 202b, 202c, 202e der Messvorrichtung zugreifen.

Unter dem Datenstrukturnamen 203e "Adjustment" sind Parameter gespeichert, welche beispielsweise einen Abgleich der gemessenen Distanz vom Sensor zur Füllgutoberfläche zum Füllstand eines Füllgutbehälters erlauben. Die Werte adjustMinPercent und adjustMaxPercent erlauben eine Umrechnung eines Füllstands in eine prozentuale Angabe des Füllstands des betrachteten Behälters. Die Variablen adjustMinPhysical und adjustMaxPhysical bezeichnen den minimal und maximal möglichen Füllstand, insbesondere den tatsächlichen Abstand eines Füllguts von einem Sensor. Ferner gibt die Varibale adjustPhysicalUnit ID an, in welcher Einheit der Messsensor den Füllstand misst. Mögliche Parameter für die Einheit können sein m (Meter), ft (Fuß), inch, cm (Zentimeter) odermm (Millimeter).

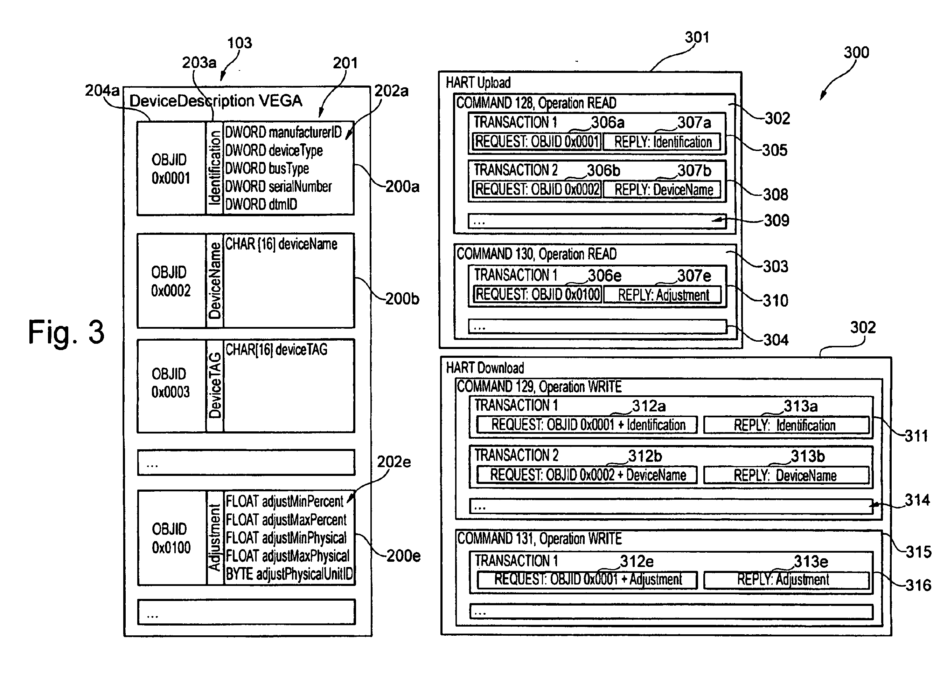

Fig. 3 zeigt ein Mappingschema einer gerätespezifischen Beschreibungssprache auf die Beschreibungssprache eines ersten Bedientools gemäß einem exemplarischen Ausführungsbeispiel der vorliegenden Erfmdung.

In Fig. 3 ist die Messvorrichtung 103 aus Fig. 2 neben einer als ein Blockdiagramm schematisiert dargestellten HART Beschreibungssprache 300 in einem Bedientool dargestellt. Zur Darstellung für ein Bedientool werden in Fig. 3 die HART Kommandos in einer sog. DDL (Device Description Language) dargestellt. Die DDL ermöglicht es einen Gerätetreiber bereitzustellen, auf den ein Bedientool einer höheren Anwendungsebene zurückgreifen kann, um einen Messsensor 103 oder eine Messvorrichtung 103 abzufragen oder Werte zu setzen, ohne sich um eine direkte Adressierung auf dem Feldbus kümmern zu müssen.

Das Bedientool auf einer höheren Ebene greift auf die Speicherzellen der Messvorrichtung 103 zu. Die Adressierung übernimmt die Gerätebeschreibung, indem die Variablen und insbesondere die Adressen der zugehörigen Speicherzellen in eine Command/Transaction Schreibweise oder Kommando/Transaktions Schreibweise umgeformt werden.

Ein Command oder Kommando kann, vorgegeben durch die Spezifikation der Beschreibungssprache, 8 Bit adressieren. Mit einem Adressraum von 8 Bit lassen sich 0 bis 255 Blöcke oder Objekt-IDs oder Obj IDs oder Transaktionen festlegen. Eine Transaktion entspricht dabei einer Abfrage eines Blocks oder eines zusammengefassten Blocks. Den Zusammenhang, mit welcher Abfrage bzw. mit welchem Request welche Datenstruktur abgefragt wird, wird von dem Codegenerator 100 beim Erstellen der zweiten Gerätebeschreibung 300 festgelegt.

Ein Kommando oder eine Abfrage kann die Operation Lesen zum Auslesen (Read) von Speicherzellen auf der Messvorrichtung 103 aufweisen oder die Operation Schreiben (Write) zum Setzen von Parametern. In einem Beispiel mögen gerade Kommandonummern, beispielsweise 128,130, 132 etc., zu Leseoperationen gehören, während ungerade Kommandonummern, beispielsweise 129, 131, etc., zu Schreibeoperationen gehören. Folglich lassen sich in der Gerätebeschreibung 300 die zwei Blöcke HART Upload 301 und HART Download 302 unterteilen. HART Upload betrifft die Abfragen (Lesen) auf die Speicheradressen 201 und Download betrifft das Setzen (Schreiben) von Speicherzellen 201.

Die Gerätebeschreibung 300 wird auf einen herstellerspezifischen Bereich gemappt, welchen das HART Protokoll vorsieht. Kommandos mit der Kommandonummer 128 bis zu der Kommandonummer 253 stehen für die herstellerspezifische Verwendung, d. h. für die Device Specific Verwendung oder gerätespezifische Verwendung zur Verfügung. Die Gerätebeschreibung 300 läuft auf einem Bedientool.

Der Uploadblock 301 dient der Abfrage von Datenstrukturen 201 aus der Messvorrichtung 103. Daher umfasst der Uploadblock 301 die geraden Kommandonummern 128 mit der Operation Lesen 302 und die Kommandonummer 130 mit der Operation Lesen 303. Darüber hinaus können weitere gerade Kommandos zur Verfügung gestellt werden, wie mit Kasten 304 angedeutet ist.

Eine Transaktion, wie beispielsweise die Transaktion 1 305, kann einen Abfragebefehl (Request) einer bestimmten Objekt-ID, z. B. Objekt-ID 001 306a, aufweisen. Ferner kann die Transaktion 1 305 festlegen, dass als Antwort auf die Anfrage mit Objekt-ID 0x0001 in hexadezimaler Schreibweise die Datenstruktur Identifikation 307a als Antwort geliefert wird.

Mit Absetzen ebenfalls des Kommandos 128 auf den HART Bus kann unter Transaktion 2 308 und Senden des Requests mit der Objekt-ID 0x0002 306b als Antwort die Datenstruktur Device Name 307b erhalten werden, welche ebenfalls auf der Messvorrichtung als zweiter Block 200b gespeichert ist. Der erste Block, welcher zur Transaktion 1 305 gehört, ist auf der Messvorrichtung als Block 200a gespeichert.

Da, wie mit Kasten 309 angedeutet ist, ein Kommando in der Kommando/Transaktionsschreibweise nach der DDL Spezifikation lediglich 255 Transaktionen aufweisen kann, wird auf eine weitere Kommandonummer, beispielsweise Kommando 130 303, zurückgegriffen; wenn mehr als 255 Objekt-IDs oder Blöcke oder Datenstrukturen von der Messvorrichtung 103 gelesen werden sollen. So wird beispielsweise die Objekt-ID 0x0100 200e, welche in dezimaler Schreibweise der 256 entspricht, mittels des Kommandos 130 und der Operation Lesen unter der Transaktionsnummer 1 310 abgefragt. Die Abfrage oder Request der Objekt-ID 0x0100 306e liefert dabei als Antwort 307e die Datenstruktur "Adjustment" samt ihrer Variablen, wie in Block 200e bzw. in Datenstruktur 202e dargestellt.

Somit wird, wenn auf eine einzige Variable, wie beispielsweise die Manufacturer-ID 202a, zugegriffen werden soll, herausgefunden, dass diese Variable über den Datenstrukturnamen Identifikation 203a verfügbar ist, wenn die Objekt-ID 204a 0x001 abgefragt wird. D. h. die Abfrage der Manufacturer-ID wird durch die bereitgestellte zweite Gerätebeschreibung auf einen Abfragebefehl mittels HART Kommando 128, der Operation Lesen (Read) und dem Request mit Objekt-ID 0x0001 306a gemappt. Der Rückgabewert 307a liefert die gesamte Datenstruktur Identifikation 200a, aus welcher die gewünschte Manufacturer-ID herausgefiltert wird.

Analog verhält es sich mit den weiteren Objekt-IDs. Somit lassen sich die gesamten Speicherzellen bzw. Variablen 201 der Messvorrichtung 103 auf einen Device Specific (Geräte spezifischen) Kommandobereich des HART Protokolls 300 mappen, wobei jeder Speicherzelle 201 eindeutig eine Kombination aus Kommando und Transaktion zugeordnet wird.

Aus Gründen der Performance sollte daher beim Erstellen der Datenstrukturen darauf geachtet werden, dass solche Variablen zu Datenstrukturen zusammengefasst werden, die bei der Bedienung in einem Bedientool gemeinsam dargestellt und daher auch zeitgleich gelesen bzw. geschrieben werden müssen.

Es ist denkbar, dass bei dem Initialisieren eines Sensors alle Parameter des Sensors in ein Bedienttool eingelesen wird, dass sie dort verfügbar sind.

Ebenfalls analog verhält es sich mit dem Setzen, d. h. dem Beschreiben der Speicherzellen mit spezifischen Werten. Beim Beschreiben wird auf die ungeraden Kommandos des HART Downloadblocks 302 zurückgegriffen. Die ungeraden Kommandos liegen im Bereich 129 bis 253. Der dem Abfrageblock der Transaktion 1 entsprechende Schreibblock 311 wird über die Kommandonummer 129 und die Operation oder Zugriffsart Write und die Transaktionsnummer 1 adressiert. Innerhalb der Transaktion 1 311 wird der Request oder die Abfrage der Objekt-ID 0x001 312a zusammen mit zu setzenden Werten für die Datenstruktur Identifikation zu der Messvorrichtung 103 gesendet 312. Es wird als Rückmeldung von der Messvorrichtung zum Bestätigen des korrekten Empfangens der Datenstruktur Identifikation, welche dem ersten Datenblock 200a entspricht, die Identifikation zurückgeschrieben 313a.

Auf den Gerätenamen, welcher in dem zweiten Objektblock 200b der Messvorrichtung gespeichert ist, lässt sich mittels HART Kommando 129 und der Transaktion 2, d. h. dem Request, mittels der Operation Schreiben unter der Objekt-ID 0x0002 zusammen mit den Werten für den Gerätenamen oder den Device Name zugegriffen 312b. Als Antwort zur Bestätigung des korrekten Schreibens wird von der Firmware des Messsensors 103 der Rückmeldewert 313b als Reply Wert der Device Name auf den Bus zurückgeschrieben.

Ebenfalls lassen sich mittels eines Kommandos, beispielsweise mittels dem Kommando 129, 256 Befehle oder Transaktionen eindeutig identifizieren 314. Für einen Fall, dass mehr Blöcke als 255 Blöcke und entsprechend mehr Variablen auf dem Messgerät gesetzt oder gelesen werden sollen, kann der Adressbereich oder der Wertebereich erweitert werden, indem auf das nächstfolgende ungerade Kommando beispielsweise Kommando 131 und die Operation Schreiben oder Write 315 zurückgegriffen wird. Als Transaktion 316 ist wiederum eine Abfrage 312e der Objekt-ID 0x0100 zusammen mit der Datenstruktur 202e Adjustment möglich, wie im Bock 312e angedeutet. Als Antwort wird ebenfalls die Datenstruktur Adjustment 313e auf den Bus zurückgeschrieben, um das korrekte Empfangen seitens der Messvorrichtung zu bestätigen.

Mittels der Aufteilung auf Kommandos und Transaktionen lassen sich erzeugte Zielgerätebeschreibungen oder zweite Gerätebeschreibungen 300 so als Treiber für einen HART Bus für ein Bedientool zur Verfügung stellen, dass alle vorhandenen Variablen auf der Messvorrichtung 103 mittels entsprechenden Kombinationen von Kommando und Transaktion in der Beschreibungssprache und insbesondere in einer erzeugten Beschreibungssprachendatei oder DDL Datei darstellbar sind. Eine solche Gerätebeschreibung kann auf das Bedientool geladen werden und dadurch kann es dem Bedientool ermöglicht werden, auf einzelne Speicherbereiche auf der Messvorrichtung zuzugreifen. Aufgrund der Wahl der Blockgröße ist es möglich, dass mittels der selben Adressierungsstruktur insbesondere unter den selben Objekt-IDs die selben Datenstrukturen unabhängig von dem verwendeten Feldbussystem bereitgestellt werden können. Diese einheitliche Darstellung mag das Erstellen von Gerätebeschreibungen vereinheitlichen.

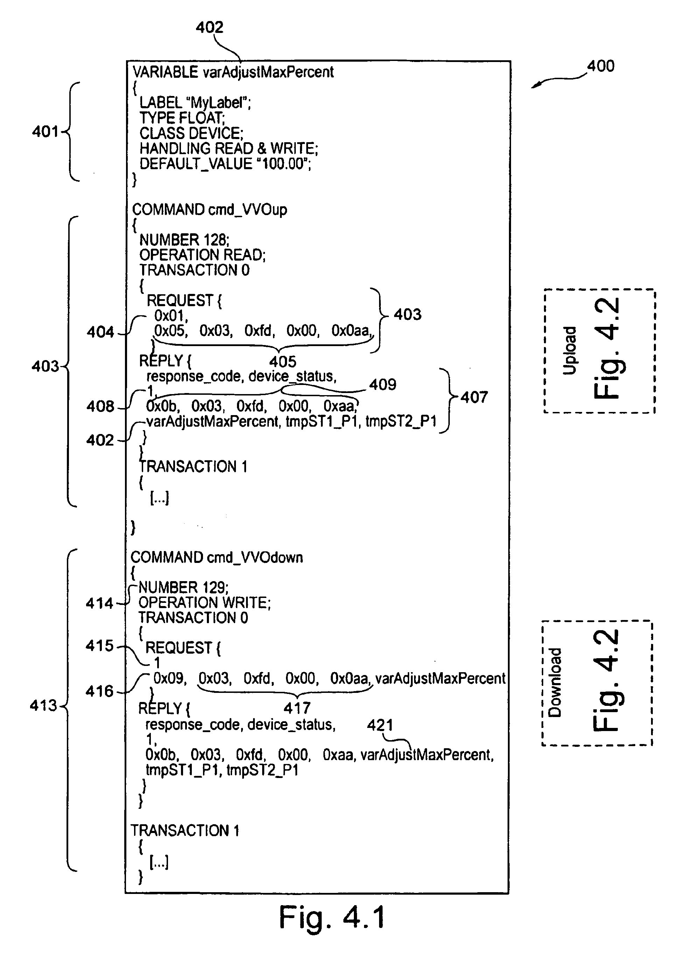

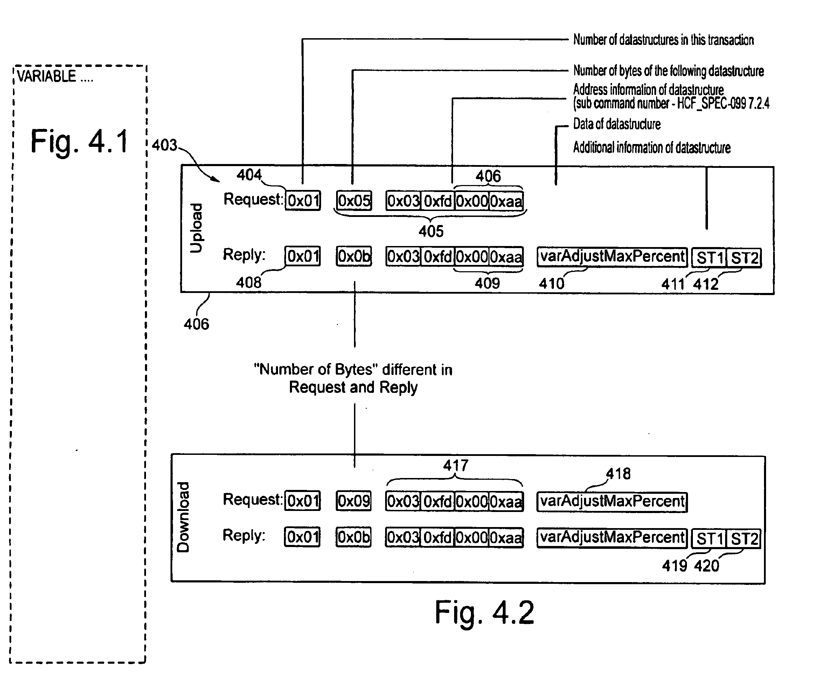

Fig. 4 zeigt eine detaillierte Darstellung einer Gerätebeschreibung in einer Gerätebeschreibungssprache mit zugehörigen Upload- und Downloadbefehlen gemäß einem exemplarischen Ausführungsbeispiel der vorliegenden Erfindung. Upload und Download werden in ein Busprotokoll eingebettet oder gekapselt.

Der Programmcode 400 ist ein Ausschnitt aus einem Programmcode, welchen ein Codegenerator als zweite Gerätebeschreibung erzeugen kann. Bei dem Programmcode gemäß Fig. 4 handelt es sich um Programmcode in der sog. Device Description Language (DDL), d. h. in einer Gerätebeschreibungssprache.

Der Programmcode in der DDL kann für ein HART Bedientool eingesetzt werden. Dabei fungiert der Programmcode 400 oder die Gerätebeschreibung 400 als Treiber, welcher einem Bedientool ermöglicht, einen zu einer Variablen gehörigen Abfragebefehl für einen Upload und/oder Download bereitzustellen. Dazu werden in einem ersten Programmabschnitt 401 Variablen wie ein Label, der Typ Float, die Klasse Device (Class Device) und der Handle (Handling Read & Write) und ein Default Value mit dem Wert 100.00 definiert. Mit diesen Definitionen wird die Variable 402 adjustMaxPercent definiert (die Variable adjustMaxPercent der Fig. 4 unterscheidet sich von der Variablen adjustMaxPercent von Fig.3).

In einem ersten Kommandodefinitionsblock 403 wird das Kommando definiert beispielsweise das Kommando CMD_VV0up. VVO kann die Bezeichnung für das VEGA Protokoll, einem Feldbusprotokoll sein. UP steht für Upload und kennzeichnet das Kommando als Upload. Down steht für download und kennzeichnet das Kommando als Download.

Zur Definition eines Befehls wird der entsprechende Textabschnitt der Gerätebeschreibung mit dem Schlüsselwort "Command" eingeleitet. Darauf erfolgt eine Definition der Kommandonummer als Kommando 128. Die gerade Nummer deutet an, dass es sich um ein Upload-Kommando, d. h. um ein Auslesekommando oder ein Read-Kommando handelt. Daher wird die Operation auch als Read-Operation definiert.

Die Wahl gerade COMMANDs für Uploads und die ungeraden COMMANDs für Downloads zu verwenden mag ein Beispiel einer möglichen Definition sein. Es wäre in einem anderen Beispiel auch denkbar, die COMMANDS 128 bis 148 für Uploads und die COMMANDS 149 bis 159 für Downloads zu verwenden.

Ferner wird als erste Transaktion mit der Transaktionsnummer 0 festgelegt, was auf einem Bus ausgegeben wird bei der Anfrage der zuvor definierten Variable adjustMaxPercent 402. Die Variable adjustMaxPercent 402 kann beispielsweise von einem Bedientool auf einer höheren logischen Programmebene angefragt werden.

Dementsprechend wird in dem Requestprogrammblock 403 definiert, dass, um die Variable adjustMaxPercent 402 zu erhalten, ein Request-kommando mit der Nummer 128 auf dem Bus ausgegeben werden muss, wobei die Anzahl zusammengefasster Datenstrukturen aufweist. Diese beträgt im vorliegenden Fall 0x01 404, also ist ein einziges Kommando betroffen und keine Zusammenfassung von Kommandos ist erfolgt.

Ferner wird als Adressinformation die Codesequenz 405 ausgegeben, welche der Reihenfolge nach lautet 0x05, 0x03, 0xfd, 0x00, 0xaa.

Die entsprechende Requestnachricht 403 ist in dem Uploadkommandoblock 406 nochmals übersichtlich dargestellt. Es ist zu sehen, dass der Requestbefehl mit der Objekt-ID 404 0x01 eingeleitet wird. Danach folgt die Länge der nachfolgenden Datenstruktur als Anzahl von Bytes, welche im vorliegenden Fall 0x05 beträgt. Dabei ist die Anzahl der nachfolgenden Bytes inklusive der Angabe der Anzahl der Bytes angegeben.

Die Anzahl der in einer Transaktion übertragenen Befehle im Feld 404 kann beispielsweise verwendet werden, falls mehrere Transaktionen in einem Befehl zusammengefasst werden und somit mit einem Befehl mehrere Blöcke abgefragt werden. (Entsprechende Felder sind auch bei einem Download vorgesehen).

Daran anschließend wird die Wertefolge 0x03 und 0xfd angegeben. Der hexadezimale Wert0x03 steht hierfür für Anzahl Bytes, die für die Objekt - ID genutzt werden. Das erste Byte der Objekt-ID 406 wird hierbei konstant auf 0xf gesetzt um zu signalisieren, dass es sich um ein Objekt der aktuellen Gerätegeneration handelt und es folgen zwei variable Bytes mit der eigentlichen Adressinformation, hier beispielsweise 0x00 und 0xaa für 0x00aa.

Der Variablennamen, der mittels der Kommandonummer/Transaktionskombination 128/0 abgefragt werden kann, ist die Variable adjustMaxPercent. Dass diese mittels einer entsprechenden Abfrage 403 erhalten wird, wird in dem Antwortblock 407 definiert. Dabei wird angezeigt, dass sich wiederum nur eine Datenstruktur 408 in der Antwortnachricht befindet. Danach schließt sich ebenfalls die Datenfolge 409 an. Diese zeigt wiederum die Anzahl der umfassten Bytes im vorliegenden Fall 0x0b einschließlich des Feldes für die Anzahl der folgenden Bytes. Darauf folgt die angefragte Adresse 0x03, 0xfd aus Kompatibilitätsgründen und die Objekt-ID 409 0x00, 0xaa.

Der Parameter oder die Variable 410 oder die Datenstruktur adjustMaxPercent wird in Form einer Datenstruktur, d. h. zusammen mit anderen Variablen zurückgeliefert. varAdjust Max Percent ist somit eine Datenstruktur, die eine Variable beinhaltet.

Außerdem werden noch weitere Statusinformationen der Datenstruktur als Statusbytes ST1 411 und ST2 412 zurückgeliefert. Alternativ kann auch nur ein einziges Statusbyte verwendet werden.

Zum Einstellen von Parameterwerten auf der Messvorrichtung 103, d.h. zum Parametrieren der Messvorrichtung 103, wird ebenfalls mittels dem Codegenerator ein Kommando in Form einer DDL generiert 413. Da es sich um einen Schreibbefehl, Write oder Setzbefehl handelt, wird als Kommandonummer die Nummer 129 414 gewählt. D. h. die Nummern der Schreibbefehle liegen zwischen den Nummern der Lesebefehle. (was nicht zwingend so sein muss - siehe oben)

Als Operation wird die Schreiboperation gewählt und wiederum kann von Transaktionsnummer 0 bis Transaktionsnummer 255 ein eindeutig definierter Schreibbefehl definiert werden. Zum Schreiben wird ein Request bestehend aus der Adressinformation und den Werten der zu Schreibenden Datenstruktur 415 von 1 gesendet.

Die Länge der nachfolgenden Parameter wird im nachfolgenden mit Kommas separiertem Teil des Befehls festgelegt 416. Im vorliegenden Fall handelt es sich um eine Länge von 9 Bytes einschließlich der Längenangabe 416. Darauf folgt eine Adressinformation 417, welche die Kompatibilitätswerte 0x03 und 0xfd aufweist und die Objekt-ID 0x00, 0xaa, welche zu der Objekt-ID 0x00aa zusammengesetzt wird. Diese Objekt-ID stellt die Basisadresse für die zu setzende Datenstruktur dar. Im vorliegenden Fall ist die zu setzende Datenstruktur 418 anzugeben. Als Antwort für ein erfolgreiches Setzen werden die im Request bereits angegebenen Parameter wiederholt und zusätzlich die Statusbytes 419 und 420 angegeben (Reply).

In anderen Worten kann sich sowohl ein Lesebefehl als auch ein Schreibbefehl jeweils aus einer Anfrage (Request) und einer Antwort (Reply) zusammensetzen.

Somit kann das Bedientool durch Zugriff auf die Variable 421 herausfinden, welcher Request auf den Bus gelegt werden muss, d. h. mit welcher Requestnummer 129 414 und mit welcher Adressinformation 417, um die richtige Datenstruktur 421 anzusprechen. Folglich ist in der Beschreibungssprache zwischen der Objekt ID und den Statusbytes die Auflistung aller einzelnen Variablen, die Bestandteil der Datenstruktur sind angegeben. Auch bei den Downloadkommandos können bis zu 256 Transaktionen definiert werden.

Damit lässt sich ein Mappen der gerätespezifischen Blöcke auf Befehle und auf Parameter für ein Bedientool bereitstellen.

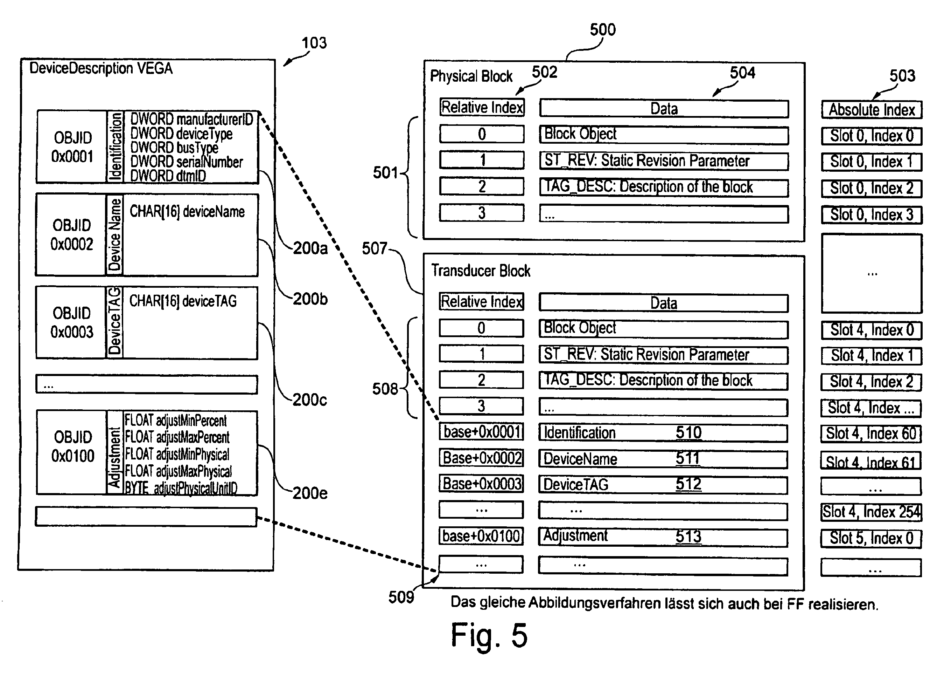

Fig. 5 zeigt wie die Gerätebeschreibung 103 im Falle der Auswahl eines Profibus PA Feldbusses als Zielgerätebeschreibung gemappt wird. Das gleiche Abbildungsverfahren, welches in Fig. 5 für einen Profibus PA dargestellt ist, lässt sich auch bei einem Foundation Fieldbus System durchführen.

Kommandos für den Profibus mögen in Blöcken organisiert sein. Dabei umfasst der physikalische Block 500 feste Abfrageparameter, welche die Identifizierung der Hardware-betreffen. Diese Abfrageparameter sind in Blöcken 501 organisiert, welche von einem relativen Index 0 bis 3 reichen, und von einem absoluten Index 503 von Slot 0, Index 0 bis Slot 0, Index 3, wobei die Indexnummer so lange hochgezählt wird, bis ein Wert von 254 erreicht ist, wonach dann mit einer Erhöhung der Slotnummer fortgezählt wird.

Somit lässt sich mittels der Slot/Indexindizierung ein absoluter Index 503 für den relativen Index 502 angeben. Der physikalische Block 500 umfasst die Datenblöcke 504, welche das Blockobjekt, die Static Revision Parameter und die Description des Blockes umfassen. Ferner umfasst eine Profibus Gerätebeschreibung den Funktionsblock 505, nicht in Fig. 5 gezeigt.

Der Funktionsblock 505 reicht von dem relativen Index 0 bis 3 des Funktionsblocks und umfasst die Datenblöcke 506, welche ein Blockobjekt, einen Static Revision Parameter und ein Description of the Block, also eine Blockbeschreibung, umfassen. Darüber hinaus umfasst eine Beschreibung für den Profibus PA, welche ebenfalls in einer Beschreibungssprache, wie DDL oder EDDL erfolgen kann, einen Transducer Block 507.

In einem relativen Indexbereich des Transducer Blocks von 0 bis 3, der auf absolute Indexnummern Slot4, Index 0 bis Slot 4, Index 3 reicht, werden ebenfalls ein Blockobjekt, ein Static Revision Parameter und eine Beschreibung des Blocks angegeben. Ferner können weitere Daten in dem Transducer Block angegeben werden, weshalb nicht vorbestimmbar ist, an welcher Position ein vorgeschriebener Teil des Transducer Blocks 508 endet. Dies ist mit drei Punkten in Fig. 5 angedeutet.

Nachfolgende Funktionsblöcke bzw. Aufrufe werden beginnend von einer Basisadresse (Base) mit der Objekt-ID des entsprechenden Blocks 200a bis 200f der Gerätebeschreibung 103 dargestellt. Somit werden die Blöcke und insbesondere die Parameterwerte oder Variablenwerte 202a bis 202e auf einen entsprechenden gerätespezifischen Teil des Transducerblocks 509 gemappt, der zur Verfügung steht.

Die Blockgröße, d. h. die mit einem Block zu übertragende Information weist eine maximale Größe von 64 Byte auf. Da jedoch die Blockgröße 200a, 200b, 200c, 200e an der maximalen Blockgröße im HART Feldbus orientiert ist, sind die Blöcke des Transducer Blocks nicht vollständig gefüllt.

Im folgenden wird beschrieben, welche Blöcke der Messvorrichtung 103 auf die entsprechenden Blöcke in dem Transducerblock 507 gemappt werden.

Die Datenstruktur Identifikation 200a mit der Objekt ID 0x0001 wird auf den Block Identifikation 510 gemappt.

Die Objekt-ID 0002, welche den Block Device Namen 200b beschreibt, wird auf die Basisadresse zuzüglich der Objekt-ID und somit auf den Device Namenblock 511 gemappt.

Die Objekt-ID 0x0003 des Device TAG Blocks 200c wird auf den Device TAG 512 gemappt und die Datenstruktur Adjustment des Blocks 200e der Objekt-ID 0x0100 wird auf den Block 513 entsprechend Slot 5, Index 0 in absoluter Adressierung oder Basisadresse plus Objekt-ID 0x100 in relativer Adressierung gemappt.

Obwohl jeder der Blöcke nach der Profibus Spezifikation 510, 511, 512, 513 die Größe von 64 Byte aufweist, umfasst der Inhalt lediglich 20 Byte, um mit der maximalen Größe, die durch den HART Feldbus, welcher alternativ zu dem Profibus verwendet werden soll, kompatibel zu sein.

Es wäre denkbar, dass insbesondere beim Lesen einzelner Transducerblöcke meherere kleine HART - Blöcke zu einem Profibus - Block oder zu einem Transducerblock zusammengefasst werden. Auch beim Schreiben könnte diese Möglichkeit existieren.

Die Indizierung mittels Slotnummer und Indexnummer mag der Indizierung bei der HART Gerätebeschreibung mittels Kommando und Transaktionsnummer entsprechen. Somit lässt sich die selbe Gerätespezifikation der Messgerätevorrichtung 103 auch in einer entsprechenden Profibus Adressierung darstellen.

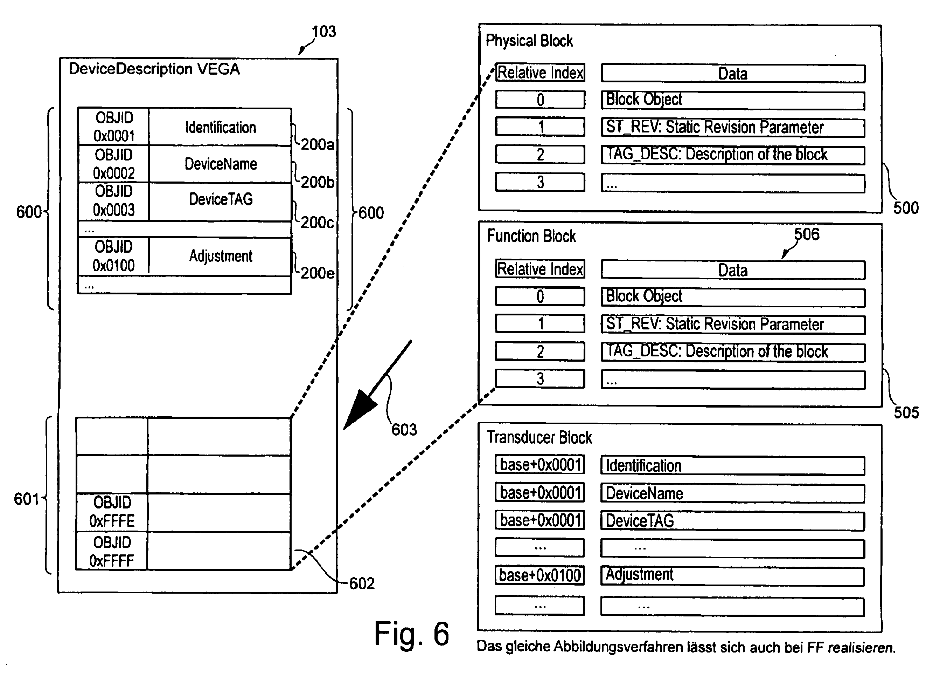

Fig. 6 zeigt ein Blockdiagramm eines Bedientools und einer Messgerätevorrichtung, wobei ein physikalischer Block und ein Funktionsblock auf eine gerätespezifische Beschreibung zurückgemappt wird gemäß einem exemplarischen Ausführungsbeispiel der vorliegenden Erfindung.

Die Device Description 103 mag in einem sequenziellen Block 600 die einzelnen Datenstrukturen oder Datenstrukturblöcke 200a, 200b, 200c, 200e aufweisen. Wenn alle verfügbaren Variablen auf den Speicher der Messvorrichtung 103 verteilt sind, mag in dem Speicher der Messvorrichtung 103 noch ein freier Bereich 601 vorhanden sein. Beginnend von der höchsten Objekt-ID 0xffff 602 werden in absteigender Objekt-ID Reihenfolge die Parameter des physikalischen Blocks 500 und des Funktionsblocks 505 gemappt. Bei dem Mappen kann eine feste Zuordnung beginnend mit der Anfangsadresse existieren, die sich aus Endadresse abzüglich der Anzahl der benötigten Slots ergibt. Dabei wird beispielsweise die Beschreibung des funktionalen Blocks 505 auf die Objekt-ID 0xffff 6 gemappt

Somit lässt sich in der herstellereigenen Gerätebeschreibung der Messvorrichtung 103 ein zwingend notwendiger physikalischer Block und ein optional notwendiger funktionaler Block des Profibus Feldbus Protokolls abspeichern. Es erfolgt somit, wie durch Pfeil 603 angedeutet, ein Rückmapping der Parameter des physikalischen Blocks 500 und des Funktionsblocks 505 auf die hintersten Bereiche 601 eines Speichers einer Messvorrichtung 103. Ähnlich wie beim Profibus PA lässt sich das Rückmappen oder das Abbildungsverfahren auch auf den Foundation Field Bus anwenden.

Fig. 7 zeigt ein Flussdiagramm für ein Verfahren zum Generieren einer Gerätebeschreibung einer Messvorrichtung gemäß einem exemplarischen Ausführungsbeispiel der vorliegenden Erfindung.

In Schritt S700 befindet sich das Verfahren in einem Idle Zustand.

In Schritt S701 wird eine erste Gerätebeschreibung einer Messvorrichtung beispielsweise in einer Empfangseinrichtung empfangen. Die erste Gerätebeschreibung oder gerätespezifische Beschreibung, in einer sensorspezifischen Beschreibungssprache oder Messvorrichtungsbeschreibungssprache empfangen.

Dabei weist die erste Gerätebeschreibung der Messvorrichtung zumindest eine Variable auf, wobei die zumindest eine Variable mit einer Speicherzelle der Messvorrichtung, insbesondere einer Speichereinrichtung der Messvorrichtung in Beziehung steht. Somit gibt die Variable der Speicherzelle einen Namen. Durch eineindeutige Abbildung ist auch der Name einer Speicherzelle eineindeutig und die Speicherzelle eineindeutig bestimmt, wodurch eindeutige Werte in die entsprechende Speicherzelle gespeichert werden können.

In Schritt S702 erfolgt das Auswählen eines Zielfeldbusprotokolls aus einer Vielzahl von Feldbusprotokollen und in Schritt S703 wird ein Speicherbereich umfassend eine Vielzahl von Speicherzellen der Messvorrichtung in einzelne Blöcke aufgeteilt, wobei jeder der Blöcke zumindest eine Variable oder Speicherzelle aufweist.

Der zumindest eine Block weist eine maximale Blockgröße auf, welche der kleinsten maximalen Blockgröße der Vielzahl von Feldbusprotokollen entspricht. Es wird somit von jedem der möglichen angebotenen Feldbusprotokolle (beispielsweise von der Auswahleinrichtung) die maximale mit einer einzigen Abfrage oder mit einem einzigen Request übertragbare Blockgröße ermittelt.

Dabei bezieht sich Übertragen sowohl auf Downloadrichtung als auch auf die Uploadrichtung. Die Uploadrichtung bezeichnet das auslesen aus einer Messvorrichtung, während die Downloadrichtung das einspielen von Werten auf der Messvorrichtung betrifft.

Von den ermittelten maximalen Blockgrößen der unterschiedlichen Feldbusprotokolle wird die kleinste maximale Größe ermittelt, welche sodann verwendet wird um die Speicherzellen der Messvorrichtung in Blöcke aufzuteilen. Sollte die Speichereinrichtung beispielsweise durch das Chipdesign eines Speichers für das Feldgerät bereits in diese kleinste maximale Blockgröße aufgeteilt bzw. strukturiert sein, kann der Schritt des Aufteilens entfallen.

Die maximale Blockgröße ist dabei diejenige Blockgröße, welche mit einer einzigen Anforderung bei Einsatz des jeweiligen Feldbusprotokolls über den Feldbus übertragen werden kann. Somit kann in den verschiedenen bzw. in der Vielzahl von verfügbaren Feldbusprotokollen oder Zielfeldbusprotokollen eine einheitliche Adressierung der Variablen bzw. Parameter oder Speicherzellen der Messvorrichtung erfolgen. In Schritt S704 wird das für das ausgewählte Feldbusprotokoll ermittelte Adressierungsschema oder der zumindest eine ermittelte Block als zweite Gerätebeschreibung oder Zielgerätebeschreibung bereitgestellt, bevor das Verfahren in Schritt 705 wieder in einen Idle Zustand fällt.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Generieren einer Gerätebeschreibung für eine Messvorrichtung (103) in einem Ziel-Feldbusprotokoll, aufweisend:
Empfangen einer ersten Gerätebeschreibung (200a, 200b,200e) der Messvorrichtung (103);
wobei die erste Gerätebeschreibung (200a, 200b,200e) der Messvorrichtung zumindest eine Variable (202a, 202b, 202c) aufweist,
wobei die zumindest eine Variable (202a, 202b, 202c) mit einer Speicherzelle (201) der Messvorrichtung (203) in Beziehung steht;
Auswählen des Ziel-Feldbusprotokolls aus einer Vielzahl von Feldbusprotokollen;
Bilden zumindest eines Blocks (200a, 200b,200e) aus der zumindest einen Variable (202a, 202b, 202c);
wobei der zumindest eine Block (200a, 200b,200e) eine maximale Blockgröße aufweist, welche maximale Blockgröße der kleinsten maximalen Blockgröße von zumindest zwei der Vielzahl von Feldbusprotokollen entspricht, welche maximale Blockgröße mit einer einzigen Anforderung bei Einsatz des jeweiligen Feldbusprotokolls über einen Feldbus übertragen werden kann;
Bereitstellen des zumindest einen Blocks (200a, 200b,200e) als zweite Gerätebeschreibung für die Messvorrichtung in dem Ziel-Feldbusprotokoll (300).

2. Verfahren nach Anspruch 1, wobei das Ziel-Feldbusprotokoll (300) zumindest ein Ziel-Feldbusprotokoll ausgewählt aus der Gruppe der ZielFeldbusprotokolle bestehend aus
dem HART-Feldbusprotokoll;
dem Profibus-Feldbusprotokoll;
dem Foundation Fieldbus Protokoll;
dem Modbus Protokoll;
dem IO - Link Protokoll;
dem FDI Protokoll; und
dem CAN - Protokoll
ist.

3. Verfahren nach Anspruch 1 oder 2, wobei der zumindest eine Block (200a, 200b,200e) in einer Gerätebeschreibungssprache ausgewählt aus der Gruppe der Gerätebeschreibungssprachen bestehend aus
DDL;
EDDL;
DTM; und
FDI
bereitgestellt wird.

4. Verfahren nach einem der Ansprüche 1 bis 3, wobei der zumindest eine Block (200a, 200b,200e) mittels einer Objekt-ID adressiert wird.

5. Verfahren nach einem der Ansprüche 1 bis 4, wobei die gesamte erste Gerätebeschreibung der Messvorrichtung (103) eindeutig adressiert werden kann, indem die zweite Gerätebeschreibung auf einen gerätespezifischen Bereich in einem Feldbusprotokoll projiziert wird.

6. Verfahren nach einem der Ansprüche 1 bis 5, wobei die zweite Gerätebeschreibung (300) so bereitgestellt wird, dass unterschiedliche Blöcke mittels einer Kommandonummer (302) und/oder mittels einer Transaktionsnummer adressiert werden können.

7. Verfahren nach einem der Ansprüche 1 bis 5, wobei die zweite Gerätebeschreibung so bereitgestellt wird, dass unterschiedliche Blöcke mittels einer Slotnummer (503) und/oder einem Index adressiert werden können.

8. Verfahren nach einem der Ansprüche 1 bis 7, wobei die Messvorrichtung (103) eine Messvorrichtung ausgewählt aus der Gruppe der Messvorrichtungen bestehend aus
einem Sensor;
einem Füllstandsmesssensor;
einem Druckmesssensor;
einem Grenzstandsmesssensor;
ist.

9. Verfahren nach einem der Ansprüche 1 bis 8, wobei die zumindest eine Variable einem Parametrier-Wert entspricht.

10. Verfahren nach einem der Ansprüche 1 bis 9, wobei das Verfahren weiter aufweist:
Zusammenfassen einer Vielzahl zumindest zwei Blöcken zu einem zu einem gemeinsamen Block, dessen Blockgröße kleiner oder gleich der die maximalen Blockgröße ist.

11. Verfahren nach einem der Ansprüche 1 bis 10, wobei die erste Gerätebeschreibung eine XML Datei ist.

12. Computerlesbares Speichermedium, welches einen Programm-Code aufweist, der, wenn er von einem Prozessor ausgeführt wird, das Verfahren nach einem der Ansprüche 1 bis 11 ausführt.

13. Vorrichtung (100) zum Generieren einer Gerätebeschreibung für eine Messvorrichtung, aufweisend:
eine Empfangseinrichtung (101);
eine Auswahleinrichtung (106);
eine Bereitstelleinrichtung (108);
wobei die Empfangseinrichtung (101) zum Empfangen einer ersten Gerätebeschreibung einer Messvorrichtung eingerichtet ist;
wobei die erste Gerätebeschreibung der Messvorrichtung zumindest eine Variable aufweist,
wobei die zumindest eine Variable (202a, 202b, 202e) mit einer Speicherzelle (201) der Messvorrichtung in Beziehung steht;
wobei die Auswahleinrichtung (106) zum Auswählen eines Ziel-Feldbusprotokolls aus einer Vielzahl von Feldbusprotokollen eingerichtet ist;
wobei die Bereitstelleinrichtung (108) zum Bilden zumindest eines Blocks (200a, 200b,200e) aus der zumindest einen Variable eingerichtet ist;
wobei der zumindest eine Block (200a, 200b, 200e) eine maximale Blockgröße aufweist, welche maximale Blockgröße der kleinsten maximalen Blockgröße von zumindest zwei der Vielzahl von Feldbusprotokollen entspricht, welche maximale Blockgröße mit einer einzigen Anforderung bei Einsatz des jeweiligen Feldbusprotokolls über einen Feldbus übertragen werden kann; und
wobei die Bereitstelleinrichtung (108) zum Bereitstellen des zumindest einen Blocks (200a, 200b,200e) als zweite Gerätebeschreibung für die Messvorrichtung in dem Ziel-Feldbusprotokoll eingerichtet ist.

14. Anordnung von zumindest einer Speicherzelle, auf der gespeichert ist eine Gerätebeschreibung, welche durch ein Verfahren gemäß Anspruch 1 als zweite Gerätebeschreibung erhalten worden ist.

15. Messensor (103) mit einer Anordnung nach Anspruch 14.

## Claims

1. A method for generating a device description for a measuring apparatus (103) in a target field bus protocol, comprising:
receiving a first device description (200a, 200b, 200e) of the measuring apparatus (103);
wherein the first device description (200a, 200b, 200e) of the measuring apparatus comprises at least one variable (202a, 202b, 202c),
wherein the at least one variable (202a, 202b, 202c) is related to a storage cell (201) of the measuring apparatus (203);
selecting the target field bus protocol from a plurality of field bus protocols;
forming at least one block (200a, 200b, 200e) from the at least one variable (202a, 202b, 202c);
wherein the at least one block (200a, 200b, 200e) has a maximum block size, which maximum block size corresponds to the smallest maximum block size of at least two field bus protocols of the plurality of field bus protocols, which maximum block size can be transmitted via a field bus with a single request when the respective field bus protocol is used,
providing the at least one block (200a, 200b, 200e) as second device description for the measuring apparatus in the target field bus protocol (300).

2. The method of claim 1, wherein the target field bus protocol (300) is at least one target field bus protocol that is selected from the group of target field bus protocols consisting of
the HART field bus protocol;
the Profibus field bus protocol;
the Foundation Fieldbus Protocol;
the Modbus protocol;
the 10-Link protocol;
the FDI protocol and
the CAN protocol.

3. The method of claim 1 or 2, wherein the at least one block (200a, 200b, 200e) is provided in a device description language that is selected from the group of device description languages consisting of
DDL;
EDDL;
DTM, and
FDT.

4. The method of one of claims 1 to 3, wherein the at least one block (200a, 200b, 200e) is addressed by an Object-ID.

5. The method of one of claims 1 to 4, wherein the entire first device description of the measuring apparatus (103) can be unambiguously addressed by projecting the second device description on a device-specific area in a field bus protocol.

6. The method of one of claims 1 to 5, wherein the second device description (300) is provided such that different blocks can be addressed by a command number (302) and/or by a transaction number.

7. The method of one of claims 1 to 5, wherein the second device description is provided such that different blocks can be addressed by means of a slot number (503) and/or an index.

8. The method of one of claims 1 to 7, wherein the measuring apparatus (103) is a measuring apparatus that is selected from the group of measuring apparatuses consisting of
a sensor;
a level measuring sensor;
a pressure measuring sensor, and
a limit level measuring sensor.

9. The method of one of claims 1 to 8, wherein the at least one variable corresponds to a value for setting parameter.

10. The method of one of claims 1 to 9, wherein the method furthermore comprises:
combining of a plurality at least two blocks into one joint block, the block size of which is smaller than or equal to the maximum block size.

11. The method of one of claims 1 to 10, wherein the first device description is an XML file.

12. A computer-readable storage medium comprising a program code that carries out the method of one of claims 1 to 11 when it is executed by a processor.

13. An apparatus (100) for generating a device description for a measuring apparatus, comprising:
a receiving device (101);
a selecting device (106),
a providing device (108);
wherein the receiving device (101) is adapted for receiving a first device description of a measuring apparatus;
wherein the first device description of the measuring apparatus comprises at least one variable,
wherein the at least one variable (202a, 202b, 202e) is related to a storage cell (201) of the measuring apparatus;
wherein the selecting device (106) is adapted for selecting a target field bus protocol from a plurality of field bus protocols;
wherein the providing device (108) is adapted for forming at least one block (200a, 200b, 200e) from the at least one variable;
wherein the at least one block (200a, 200b, 200e) has a maximum block size which maximum block size corresponds to the smallest maximum block size of at least two field bus protocols of the plurality of field bus protocols,
which maximum block size can be transmitted via a field bus with a single request when the respective field bus protocol is used, and
wherein the providing device (108) is adapted for providing the at least one block (200a, 200b, 200e) as second device description for the measuring apparatus in the target field bus protocol.

14. An arrangement of at least one storage cell (201) on which a device description is stored that has been obtained as a second device description by a method of claim 1.

15. A measuring sensor (103) with an arrangement of claim 14.

## Revendications

1. Procédé de génération d'une description de matériel pour un dispositif de mesure (103) dans un protocole de bus de champ objet, comprenant :
la réception d'une première description de matériel (200a, 200b, 200e) du dispositif de mesure (103) ;
la première description de matériel (200a, 200b, 200e) du dispositif de mesure présentant au moins une variable (200a, 202b, 202c),
la au moins une variable (202a, 202b, 202c) étant en relation avec une cellule de mémoire (201) du dispositif de mesure (203) ;
la sélection du protocole de bus de champ objet parmi une multiplicité de protocoles de bus de champ ;
la formation d'au moins un bloc (200a, 200b, 200e) constitué de la au moins une variable (200a, 202b, 202c) ;
le au moins un bloc (200a, 200b, 200e) présentant une taille de bloc maximale, qui correspond à la taille de bloc maximale la plus petite d'au moins deux de la multiplicité des protocoles de bus de champ, laquelle taille de bloc maximale peut être transférée à travers un bus de champ, par une demande unique, lors de la mise en oeuvre du protocole de bus de champ respectif ;
préparation de le au moins un bloc (200a, 200b, 200e) en tant que seconde description de matériel pour le dispositif de mesure dans le protocole de bus de champ objet (300).

2. Procédé suivant la revendication 1, dans lequel le protocole de bus de champ objet (300) est au moins un protocole sélectionné parmi le groupe des protocoles de bus de champ objet constitué
du protocole de bus de champ HART ;
du protocole de bus de champ Profibus ;
du protocole FOUNDATION Fieldbus ;
du protocole MODBUS ;
du protocole io-link ;
du protocole FDI ; et
du protocole CAN.

3. Procédé suivant l'une des revendications 1 et 2, dans lequel le au moins un bloc (200a, 200b, 200e) est préparé dans un langage de description de matériel sélectionné parmi le groupe des langages constitué de
DDL ;
EDDL :
DTM ; et
FDI.

4. Procédé suivant l'une des revendications 1 à 3, dans lequel le au moins un bloc (200a, 200b, 200e) est adressé au moyen d'une ID objet.

5. Procédé suivant l'une des revendications 1 à 4, dans lequel la totalité de la première description de matériel du dispositif de mesure (103) est adressable de façon univoque, la seconde description de matériel étant projetée sur une zone spécifique du matériel dans un protocole de bus de champ.

6. Procédé suivant l'une des revendications 1 à 5, dans lequel la seconde description de matériel (300) est préparée de sorte que différents blocs sont adressables au moyen d'un numéro de commande (302) et/ou au moyen d'un numéro de transaction.

7. Procédé suivant l'une des revendications 1 à 5, dans lequel la seconde description de matériel est préparée de sorte que différents blocs sont adressables au moyen d'un numéro slot (503) et/ou d'un index.

8. Procédé suivant l'une des revendications 1 à 7, dans lequel le dispositif de mesure (103) est un dispositif sélectionné parmi le groupe des dispositifs de mesure constitué
d'un capteur ;
d'un détecteur de niveau :
d'un capteur de pression ;
d'un détecteur de niveau limite.

9. Procédé suivant l'une des revendications 1 à 8, dans lequel la au moins une variable correspond à une valeur de paramétrage.

10. Procédé suivant l'une des revendications 1 à 9, dans lequel le procédé comprend en outre :
la réunion d'une multiplicité d'au moins deux blocs en un bloc commun, dont la taille est inférieure ou égale à la taille de bloc maximale.

11. Procédé suivant l'une des revendications 1 à 10, dans lequel la première description de matériel est un fichier XML.

12. Support de données lisible par ordinateur qui présente un code de programmation qui, lorsqu'il est réalisé par un processeur, exécute le procédé suivant l'une des revendications 1 à 11.

13. dispositif (100) destiné à générer une description de matériel pour un dispositif de mesure, comprenant :
un dispositif de réception (101) ;
un dispositif de sélection (106) ;
un dispositif de préparation (108);
dispositif dans lequel
le dispositif de réception (101) est conçu pour recevoir une première description de matériel d'un dispositif de mesure ;
la première description de matériel du dispositif de mesure présente au moins une variable ;
la au moins une variable (202a, 202b, 202e) est en relation avec une cellule de mémoire (201) du dispositif de mesure ;
le dispositif de sélection (106) est conçu pour sélectionner un protocole de bus de champ objet parmi une multiplicité de protocoles de bus de champ ;
le dispositif de préparation (108) est conçu pour former au moins un bloc (200a, 200b, 200e) constitué de la au moins une variable ;
le au moins un bloc (200a, 200b, 200e) présente une taille de bloc maximale, qui correspond à la taille de bloc maximale la plus petite d'au moins deux de la multiplicité des protocoles de bus de champ, laquelle taille de bloc maximale peut être transférée à travers un bus de champ, par une demande unique, lors de la mise en oeuvre du protocole de bus de champ respectif ; et
le dispositif de préparation (108) est conçu pour fournir le au moins un bloc (200a, 200b, 200e) en tant que seconde description de matériel pour le dispositif de mesure dans le protocole de bus de champ objet.

14. Agencement d'au moins une cellule de mémoire, sur laquelle est mémorisée une description de matériel, qui a été obtenue par un procédé suivant la revendication 1 en tant que seconde description de matériel.

15. Capteur de mesure (103) avec un agencement suivant la revendication 14.
